# EUROPEAN PATENT SPECIFICATION

(11) **EP 3 454 518 B1**
(45) Date of publication and mention of the grant of the patent: **22.05.2024**
(21) Application number: 16900964.4
(22) Date of filing: 15.08.2016
(51) Int. Cl.: H04Q 11/00

(54) **METHOD OF REGISTERING ON PASSIVE OPTICAL NETWORK, DEVICE, AND PASSIVE OPTICAL NETWORK**
VERFAHREN ZUR REGISTRIERUNG EINES PASSIVEN OPTISCHEN NETZWERKS, VORRICHTUNG UND PASSIVES OPTISCHES NETZWERK
PROCÉDÉ D'INSCRIPTION SUR UN RÉSEAU OPTIQUE PASSIF, DISPOSITIF ET RÉSEAU OPTIQUE PASSIF

(30) Priority: 03.05.2016 CN 201610290423
(43) Date of publication of application: 13.03.2019
(73) Proprietor: ZTE Corporation, Shenzhen, Guangdong 518057 (CN)
(72) Inventor: ZHANG, Weiliang, Shenzhen Guangdong 518057 (CN); GENG, Dan, Shenzhen Guangdong 518057 (CN)
(74) Representative: Aipex B.V.
(86) International application number: PCT/CN2016/095345
(87) International publication number: WO 2017/190442

(56) References cited:
- WO-A1-2015/176204
- CN-A- 101 827 099
- CN-A- 102 098 593
- CN-A- 102 883 234
- CN-A- 103 563 303
- US-A1- 2012 163 809
- US-B2- 9 197 351
- "Phoneline networking transceivers - Isolation function; G.989.3 (10/15)", ITU-T STANDARD, INTERNATIONAL TELECOMMUNICATION UNION, GENEVA ; CH , no. G.989.3 (10/15) 22 October 2015 (2015-10-22), pages 1-250, XP044172662, Retrieved from the Internet: URL:http://mirror.itu.int/dms/pay/itu-t/re c/g/T-REC-G.989.3-201510-I!!PDF-E.pdf [retrieved on 2016-07-04]
- DENIS KHOTIMSKY VERIZON USA: "G.989.3: PtP WDM integration - Activation;TD 566 (WP 1/15)", ITU-T DRAFT ; STUDY PERIOD 2013-2016, INTERNATIONAL TELECOMMUNICATION UNION, GENEVA ; CH, vol. 2/15, 10 June 2015 (2015-06-10), pages 1-8, XP044136233, [retrieved on 2015-06-10]

## Description

### Technical Field

The present application relates, but is not limited, to the technical field of a passive optical network, and in particular to a method and device of registering on a passive optical network.

### Background

An optical network technology includes an Active Optical Network (abbreviated as AON) and a Passive Optical Network (abbreviated as PON). An access manner of the PON has the characteristics of small front-end investment, shorter transmission distance than the AON, small coverage range, low cost and easy maintenance, and thus is more applicable to serving a household user.

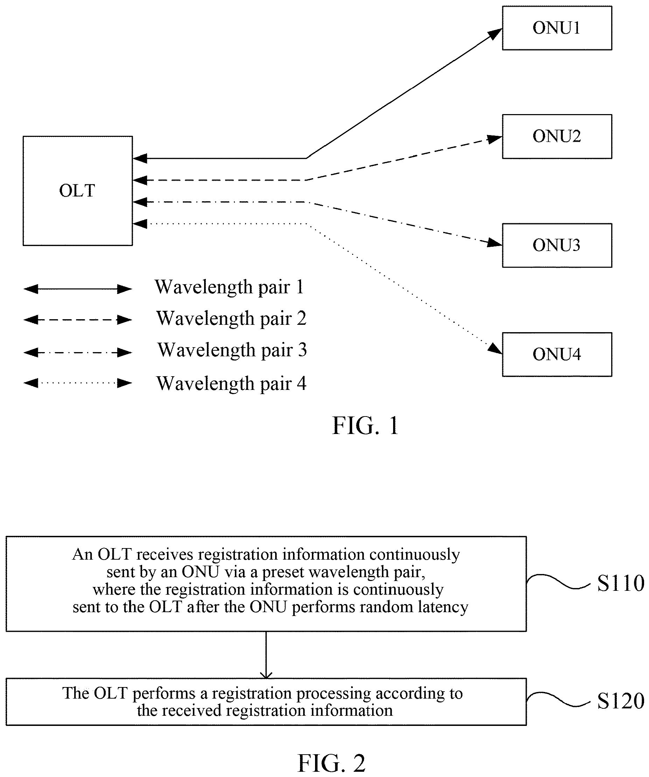

In known PON systems, data transmission modes between an Optical Network Unit (abbreviated as ONU) and an Optical Line Terminal (abbreviated as OLT) include a burst mode and a continuous mode. Comparing to the burst mode, the continuous mode has higher bandwidth utilization rate and lower cost of an optical module. A Point to Point (abbreviated as PtP) connection manner is adopted by a Wavelength Division Multiplexing PON (abbreviated as WDM PON), i.e., one OLT is respectively connected to a plurality of ONUs and each ONU occupies a wavelength pair. As shown in FIG. 1, it is a schematic diagram of a network architecture in a related WDM PON system. In FIG. 1, the ONU may communicate with the OLT individually after completing communication connection with the OLT, which is different from that a plurality of ONUs share one wavelength pair in a Time Division Multiple Access (abbreviated as TDMA) PON system. However, in a registration process after the ONUs in the WDM PON system are powered on, due to uncertainty that the ONUs select the wavelength pairs, data transmission in an uplink direction of the plurality of ONUs is not isolated from each another, i.e., a conflict may be occurred at an OLT side. Hence, in the registration process after the ONUs are powered on, it is needed to select or seize one wavelength pair to establish the communication connection with the OLT. In other words, the ONUs need to compete for an uplink wavelength during registration, i.e., the burst mode still needs to be adopted in the uplink direction of the ONUs. For the WDM PON system employing the continuous mode to work, it is needed for the ONUs to adopt the burst mode to transmit the uplink data during registration. In this case, the bandwidth utilization rate of the system is reduced, and the costs of the optical module and the system are increased.

Therefore, concerning the registration manner of the related WDM PON system, the ONUs need to adopt the burst mode to transmit the uplink data during the registration, which results in problems that the bandwidth utilization rate of the system is reduced, and the costs of the optical module and the system are increased. Further relevant technologies are also known from WO 2015/176204 A1 (HUAWEI TECH CO LTD[CN]) 26 November 2015 (2015-11-26) which relates to a communication method, device and system and describes an OLT allocating a wavelength to a PtP ONU; in a PON mode, the OLT sends wavelength information of the wavelength to the PtP ONU; and in a PtP mode, the OLT communicates with the PtP ONU according to the wavelength allocated to the PtP ONU, "Phoneline networking transceivers-Isolation function; G.989.3 (10/15)", ITU-T STANDARD, INTERNATIONAL TELECOMMUNICATION UNION, GENEVA; CH, no. G.989(10/15) 22 October 2015 (2015-10-22), pages 1-250, XP044172662 which specifies the transmission convergence layer of 40 Gigabit-capable passive optical network (NG-PON2) systems. A NG-PON2 system supports multiple wavelength channels and enables flexibility to add capacity as the demand grows to 100 Gbit/s and beyond. A NG-PON2 system may contain a set of time and wavelength division multiplexing (TWDM) channels, or a set of point-to-point wavelength division multiplexing (PtP WDM) channels, or both, and DENIS KHOTIMSKY VERIZON USA: "G.989.3: PtP WDM integration - Activation; TD 566 (WP 1/15)", ITU-T DRAFT; STUDY PERIOD 2013-2016, INTERNATIONAL TELECOMMUNICATION UNION, GENEVA; CH, vol. 2/15, 10 June 2015 (2015-06-10), pages 1-8, XP044136233 relates to PtP WDM integration - Activation concerning the standard ITU-T G.989.3.

### Summary

The following is an overview of a subject matter described in detail here, which is not intended to limit the scope of protection of claims.

Embodiments of the present invention provide a method and device of registering on a passive optical network, and a passive optical network system as defined in the attached independent claim, to solve the problems that the bandwidth utilization rate of a system is reduced and the costs of an optical module and the system are increased due to the fact that ONUs need to adopt a burst mode to transmit uplink data during registration in a known registration manner of a WDM PON system. Further improvements are provided in the dependent claims.

According to an embodiment of the present invention, also provided is a method of registering on a passive optical network. The method includes:
during a registration of each Optical Network Unit (ONU) of a plurality of ONUs to an Optical Line Terminal (OLT), the OLT receives registration information continuously sent by each ONU of the plurality of ONUs via a preset wavelength pair, where the registration information sent by each ONU of the plurality of ONUs is continuously sent to the OLT after the ONU performs random latency; and
the OLT performs a registration processing according to the received registration information;
wherein the OLT performs the registration processing according to the received registration information comprises: in a case where the OLT does not correctly analyzes the registration information sent by each ONU of the plurality of ONUs, the OLT determines that an operation of allocating a wavelength pair is not performed and indicates each ONU of the plurality of ONUs to re-send continuously registration information in random latency.

In an exemplary embodiment, that the OLT performs the registration processing according to the received registration information includes: when the OLT correctly analyzes registration information sent by a first ONU, a first wavelength pair is allocated to the first ONU.

In an exemplary embodiment, the first wavelength pair allocated to the first ONU by the OLT is a wavelength pair used when the first ONU sends the registration information, or another wavelength pair designated by the OLT.

In an exemplary embodiment, before the OLT receives the registration information continuously sent by each ONU of the plurality of ONUs via the preset wavelength pair, the method further includes:
the OLT sends a registration indication message to each ONU of the plurality of ONUs, where the registration indication message includes at least one of the following information: a random latency threshold value, and the preset wavelength pair used for registration by each ONU in an optical network system; and the random latency threshold value is used for indicating a range of the random latency performed when each ONU of the plurality of ONUs continuously sends the registration information to the OLT.

In an exemplary embodiment, before the OLT sends the registration indication message to each ONU of the plurality of ONUs, the method further includes: the OLT generates the random latency threshold value according to the length of the registration information and a preset quantity of ONUs.

In an exemplary embodiment, the registration information received by the OLT includes registration information sent by a second ONU and a third ONU; and the preset wavelength pair includes a first wavelength pair and a second wavelength pair. After the OLT performs the registration processing, the method further includes:
the OLT sends a registration feedback message to the second ONU and the third ONU;
when the OLT allocates the first wavelength pair to the second ONU, the registration feedback message includes wavelength allocation information, where the wavelength allocation information is used for indicating the second ONU to establish a communication connection with the OLT via the first wavelength pair, and the wavelength allocation information is further used for indicating the third ONU to continuously re-send registration information to the OLT via the second wavelength pair; and
when the OLT determines that the operation of allocating the wavelength pair is not performed, the registration feedback message is used for indicating the second ONU and the third ONU to continuously re-send registration information to the OLT.

In an exemplary embodiment, after the OLT determines that the operation of allocating the wavelength pair is not performed and before the registration feedback message is sent, the method further includes:
the OLT adjusts a preset quantity of ONUs, and regenerates a random latency threshold value according to the length of the registration information and the adjusted quantity of the ONUs; and the registration feedback message sent by the OLT further includes the regenerated random latency threshold value.

According to an embodiment of the present invention, also provided is a method of registering on a passive optical network. The method includes:
during a registration of an ONU to an OLT, the ONU performs random latency on registration information to be sent;
the ONU selects one wavelength pair in a preset wavelength pair to continuously send the registration information to an OLT; and
in a case where the OLT does not correctly analyzes the registration information sent by each ONU of a plurality of ONUs, the ONU performs, according to an indication of the OLT, random latency on registration information to be sent and continuously re-sends the registration information to the OLT.

In an exemplary embodiment, before the ONU performs the random latency on the registration information to be sent, the method further includes: the ONU receives a registration indication message sent by the OLT, where the registration indication message includes at least one of the following information: a random latency threshold value, and the preset wavelength pair used for registration by each ONU in an optical network system.

That the ONU performs random latency on the registration information to be sent includes:
the ONU performs the random latency on the registration information within a range indicated by the random latency threshold value.

In an exemplary embodiment, after the ONU selects one wavelength pair in the preset wavelength pair to continuously send the registration information to the OLT, the method further includes:
the ONU receives a registration feedback message sent by the OLT, where the registration feedback message includes wavelength allocation information or re-registration indication information, and the wavelength allocation information includes a first wavelength pair allocated by the OLT.

In an exemplary embodiment, the preset wavelength pair includes the first wavelength pair and a second wavelength pair; and when the registration feedback message includes the wavelength allocation information, after the ONU receives the registration feedback message sent by the OLT, the method further includes:
the ONU establishes a communication connection with the OLT via the first wavelength pair, where the first wavelength pair is a wavelength pair used when the ONU sends the registration information, or another wavelength pair designated by the OLT; or
the ONU continuously re-sends registration information to the OLT via the second wavelength pair according to the wavelength allocation information.

In an exemplary embodiment, the preset wavelength pair includes the first wavelength pair and a second wavelength pair; and when the registration feedback message includes the re-registration indication information, after the ONU receives the registration feedback message sent by the OLT, the method further includes:
the ONU selects the second wavelength pair according to the re-registration indication information to continuously re-send the registration information to the OLT.

In an exemplary embodiment, the registration feedback message further includes a random latency threshold value adjusted by the OLT, and the method further includes:
the ONU performs the random latency according to the adjusted random latency threshold value, and then continuously re-sends the registration information to the OLT.

In an exemplary embodiment, the time of the random latency performed by the ONU is greater than or equal to time of sending each piece of registration information; or the time of the random latency performed by the ONU is an integer multiple of the time of sending each piece of registration information.

According to an embodiment of the present invention, also provided is a device of registering on a passive optical network, which is arranged in an OLT. The device of registering on a passive optical network includes a receiving module and a processing module.

The receiving module is configured to be capable of during a registration of an each ONU of a plurality of ONUs to an OLT, receiving registration information continuously sent by each ONU of a plurality of ONUs via a preset wavelength pair, where the registration information sent by each ONU of the plurality of ONUs is continuously sent to the OLT after the ONU performs random latency.

The processing module connected with the receiving module, is configured to be capable of performing a registration processing according to the registration information received by the receiving module.

The processing module is configured to be capable of performing the registration processing according to the registration information received by the receiving module in the following manner: in a case where the OLT does not correctly analyzes the registration information sent by each ONU of the plurality of ONUs, determining that an operation of allocating a wavelength pair is not performed and indicating each ONU of the plurality of ONUs to re-send continuously registration information in random latency.According to an embodiment of the present invention, also provided is a device of registering on a passive optical network, which is arranged in an ONU. The device of registering on a passive optical network includes a latency module, a sending module connected with the latency module and a receiving module connected with the sending module.

The latency module is configured to be capable of performing random latency on registration information to be sent.

The sending module connected with the latency module, is configured to be capable of selecting one wavelength pair in a preset wavelength pair to continuously send the registration information to an OLT; and
the latency module is further configured to be capable of in a case where the OLT does not correctly analyzes the registration information sent by each ONU of a plurality of ONUs, performing, by the ONU, according to an indication of the OLT, random latency on registration information to be sent, and the sending module is further configured to be capable of continuously re-sending, by the ONU, the registration information to the OLT.According to the method and device of registering on a passive optical network, and the passive optical network system provided by the embodiments of the present invention, the OLT receives the registration information continuously sent by the ONU in a registration state via the preset wavelength pair, and the registration information is continuously sent to the OLT after the ONU performs the random latency, so that the OLT may perform a registration operation according to the received registration information. In the embodiments of the present invention, through a manner that the OLT opens for the registration, the OLT indicates the ONU to adopt the preset wavelength pair to continuously send the registration information, thereby avoiding the registration performed in a form of opening a quiet window and employing a burst mode to send uplink data. Therefore, the problems that the bandwidth utilization rate of the system is reduced and the costs of the optical module and the system are increased due to the fact that the ONUs need to adopt the burst mode to transmit the uplink data during the registration in the known registration manner of the WDM PON system are solved.

After reading and comprehending the accompanying drawings and the detailed description, other aspects may become apparent.

### Brief Description of Drawings

The accompanying drawings are described here to provide a further understanding of the technical solutions of the present application and form a part of the present application. The accompanying drawings together with embodiments of the present application is intended to explain the technical solutions of the present application, and does not form limits to the technical solutions of the present application.
FIG. 1 is a schematic diagram of a network architecture in a related WDM PON system.
FIG.2 is a flowchart of a method of registering on a passive optical network provided by an embodiment of the present invention.
FIG. 3 is a schematic diagram of an application scene in the method of registering on a passive optical network provided by the embodiment shown in FIG. 2.
FIG.4 is a flowchart of another method of registering on a passive optical network provided by an embodiment of the present invention.
FIG.5 is a flowchart of a still another method of registering on a passive optical network provided by an embodiment of the present invention.
FIG.6 is a flowchart of a further still another method of registering on a passive optical network provided by an embodiment of the present invention.
FIG.7 is a flowchart of a further another method of registering on a passive optical network provided by an embodiment of the present invention.
FIG.8 is a flowchart of a further another method of registering on a passive optical network provided by an embodiment of the present invention.
FIG.9 is an interaction flowchart of a method of registering on a passive optical network provided by a first example of the present application.
FIG. 10 is a schematic diagram of an application scene in the method of registering on a passive optical network provided by the embodiment shown in FIG. 9.
FIG. 11 is an interaction flowchart of a method of registering on a passive optical network provided by a second example of the present application.
FIG. 12 is a schematic diagram of an application scene in the method of registering on a passive optical network provided by the embodiment shown in FIG. 11.
FIG. 13 is a structural schematic diagram of a device of registering on a passive optical network provided by an embodiment of the present invention.
FIG. 14 is a structural schematic diagram of another device of registering on a passive optical network provided by an embodiment of the present invention.
FIG.15 is a structural schematic diagram of a still another device of registering on a passive optical network provided by an embodiment of the present invention.
FIG.16 is a structural schematic diagram of a further still another device of registering on a passive optical network provided by an embodiment of the present invention.
FIG.17 is a structural schematic diagram of a further another device of registering on a passive optical network provided by an embodiment of the present invention.
FIG.18 is a structural schematic diagram of a passive optical network system provided by an embodiment of the present invention.

### Detailed Description

Embodiments of the present invention are described in detail below in combination with the drawings. It should be noted that the embodiments of the present application and the characteristics of the embodiments may be combined with each other if there is no conflict.

The steps shown in the flowcharts of the accompanying drawings may be performed, for example, in a computer system storing a set of computer-executable instructions. In addition, although a logical order is shown in the flowcharts, in some cases, the steps shown or described may be performed in an order different from the order here.

A PON system generally includes a WDM PON system and a TDMA PON system. The data transmission mode of the PON system includes a burst mode and a continuous mode. The TDMA PON system is, for example, an Ethernet Passive Optical Network (abbreviated as EPON) system, a Gigabit-Capable PON (abbreviated as GPON) system, or a 10GEPON system, or an XG-PON1 system, etc. A plurality of ONUs in the TDMA PON system may work in the same wavelength pair. Herein, the OLT needs to open a quiet window during registration. In the quiet window, an ONU in a working state stops to send uplink data, and an ONU in a registration state sends registration information in an uplink direction. With such manner, the mutual interference between the ONU in the registration state and the ONU in the working state is avoided. In addition, in the TDMA PON system, the ONU performs sending according to bandwidth allocation of the OLT in the uplink direction, sends the uplink data when there is a bandwidth allocation, and does not send the uplink data when there is no bandwidth allocation. That is, the ONU performs sending by adopting the burst mode in the uplink direction. Compared with the burst mode, the continuous mode refers to that the sending end sends data all the time.

For example, in an EPON/10GEPON system specified by Institute of Electrical and Electronics Engineers (abbreviated as IEEE), the burst mode is adopted in uplink and downlink directions. In a GPON/XG-PON1 system specified by International Telecommunication Union Telecommunication Standardization Sector (abbreviated as ITU-T), the continuous mode is adopted in the downlink direction, and the burst mode is adopted in the uplink direction.

When the burst mode is adopted to send data, there is an interval between the two sendings. During the interval, no data is sent or a special code-pattern data is sent. Moreover, to achieve the aim that a receiver can receive correctly, usually a preamble portion and a demarcation portion are carried in a data header sent once, so the bandwidth efficiency of the burst mode is low. On the other hand, to reduce the interval between the two sendings as much as possible, a certain demand for an optical module of a terminal is met, i.e., the optical module is switched on or switched off as fast as possible, so the cost of the optical module is high. Compared with the burst mode, no such interval is provided for the continuous mode. In another words, all bandwidths or time may be used for sending data, and thus the bandwidth efficiency is high; and there is no time demand on the switching on or switching off of the optical module, so the cost of the optical module is low.

The WDM PON system is based on an Optical Distribution Network (abbreviated as ODN) formed by splitters. In the system, the ODN is formed by passive devices such as the splitter, and the splitter is arranged between an OLT and the ONU, so that each ONU may individually communicate with the OLT after completing the communication connection with the OLT, i.e., the OLT allocates a wavelength pair to each ONU that completes the communication. As mentioned in background, each ONU in the WDM PON system occupies one wavelength pair and transmits data by adopting a continuous mode, so the advantages of high bandwidth utilization rate and low cost of the optical module are achieved. However, the ONU needs to compete for an uplink wavelength in a power-on registration process, i.e., the OLT also needs to open a quiet window for an ONU in the registration state to register. At this moment, the ONU in the working state needs to stop uplink transmission, and thereby the bandwidth utilization rate of the system is reduced. Moreover, the ONU needs to adopt the burst mode during the registration to transmit the uplink data, by which the costs of the optical module and the system are increased. Therefore, providing a more efficient registration manner for the registration process of the WDM PON system and reducing the costs of the optical module and the system need to be solved urgently at present.

The technical solutions of the present application will be described below in detail via embodiments. In the following embodiments of the present application, the OLT and the ONUs all are terminals in the WDM PON system, and a PtP connection manner is adopted in the system, i.e., one OLT is connected to a plurality of ONUs. The following several embodiments provided by the present application may be combined with each other. Same or similar concept or process may not be repeated in some embodiments.

FIG.2 is a flowchart of a method of registering on a passive optical network provided by an embodiment of the present invention. The method of registering on a passive optical network provided by the embodiment is applied to a situation in which ONUs in a WDM PON system perform registration. The method may be implemented by a device of registering on a passive optical network. The device of registering on a passive optical network is implemented via a combination manner of hardware and software. The device may be integrated into a processor of an OLT to be invoked by the processor for use. As shown in FIG. 2, the method in the embodiment may include the following steps.

In Step S 110, an OLT receives registration information continuously sent by an ONU via a preset wavelength pair, where the registration information is continuously sent to the OLT after the ONU performs random latency.

The method of registering on a passive optical network provided by the embodiment of the present invention is a manner that an ONU is registered to an OLT in the WDM PON system. In the embodiment, the OLT does not need to open a quiet window, and may directly open for registration. In addition, the ONUs in the embodiment are those in the registration state in the WDM PON system. In the embodiment, the OLT has opened to the ONUs in the registration state for registration, i.e., these ONUs may adopt the preset wavelength pairs to send the registration information. In an exemplary embodiment, each ONU that sends the registration information may select one wavelength pair via a selection manner, and the wavelength pair used by each ONU to send the registration information may be a wavelength pair indicated to the ONU by the OLT. After selecting one wavelength pair, the ONU continuously sends the registration information to the OLT at a certain frequency, where the registration information is sent via a Serial Number (abbreviated as SN) message or a Media Access Control (abbreviated as MAC) message.

It should be noted that there may be more than one ONU that need to be registered on the same wavelength pair. If a plurality of ONUs send the registration information simultaneously, it may result in that the OLT cannot analyze the registration information correctly. Hence, through a random latency threshold value, each ONU is indicated to perform the random latency within a range of the random latency threshold value, and then sends the registration information. Usually, the time of the random latency performed by each ONU is different, so that the conflict caused by the plurality of ONUs sending the registration information simultaneously may be effectively avoided.

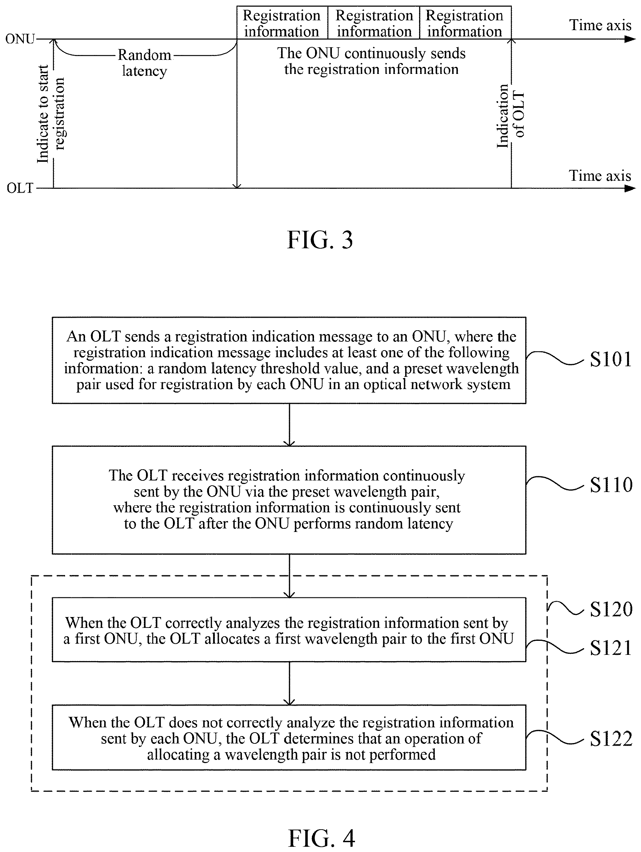

During the implementation of the embodiment, the time of the random latency performed by the ONU is greater than or equal to the time of sending each piece of registration information. Fixed content is contained in the registration information usually, i.e., the length of the registration information and the time of sending the registration information are fixed usually. For example, the time of the random latency performed by the ONU may be an integer multiple of the time of sending each piece of registration information. In such way, the OLT may be further guaranteed to receive complete registration information sent by one ONU more effectively, and thus the OLT may correctly analyze the registration information to implement the effectiveness for the registration of the ONU. As shown in FIG. 3, FIG. 3 is a schematic diagram of an application scene in the method of registering on a passive optical network provided by the embodiment shown in FIG. 2. In FIG. 3, just one ONU is shown. Moreover, FIG. 3 is illustrated with an example in which the time of the random latency performed by the ONU is 2 times of the time of sending each piece of registration information.

In Step S120, the OLT performs a registration processing according to the received registration information.

In the embodiment, since the OLT may receive the registration information sent by a plurality of ONUs, the registration information received by the OLT may be registration information with a complete content, or may also be registration information with an incomplete content. The condition of the registration information received by the OLT affects whether the OLT may correctly analyze the registration information sent by one of the ONUs, i.e., whether the OLT may correctly analyze the registration information is relevant to the time of the random latency performed by each ONU which sends the registration information. Therefore, the subsequent processing of the OLT is also relevant to the condition of the received registration information, i.e., the OLT performs the subsequent registration processing according to the received registration information. The registration processing includes, for example, performing the operation of allocating the wavelength pair, or determining that the operation of allocating the wavelength pair is not performed, or indicating the ONU to adopt another wavelength pair to re-initiate the registration. During implementation, if the OLT may correctly analyze the registration information of an ONU, a wavelength pair is allocated to the ONU. If the OLT does not correctly analyze the registration information sent by each ONU, the OLT determines that the operation of allocating the wavelength pair is not performed.

Compared with the known registration manner in the WDM PON, the OLT does not need to open the quiet window for the ONUs during the registration of the ONUs in the embodiment, i.e., the ONUs in the working state do not need to stop working in the quiet window. In another words, the ONUs in the registration state do not cause interference to the ONUs in the working state during the registration in the embodiment, and thus the bandwidth utilization rate may be improved. Furthermore, the ONUs in the registration state continuously send the registration information via wavelength pairs indicated by the OLT, so that the ONUs are prevented from adopting the burst mode to send uplink data during registration, and thus the bandwidth utilization rate is further improved. In addition, since the burst mode does not need to be adopted in the embodiment, the demand on the costs of the optical module and the system can be reduced.

According to the method of registering on a passive optical network provided by the embodiment, the OLT receives the registration information continuously sent by the ONU in the registration state via the preset wavelength pair, and the registration information is continuously sent to the OLT after the ONU performs the random latency, so that the OLT may perform the registration operation according to the received registration information. In the embodiment, the OLT indicates the ONU to adopt the preset wavelength pair to continuously send the registration information through opening the registration, thereby avoiding the registration performed in a form of opening the quiet window and adopting the burst mode to send the uplink data. Therefore, the problems that the bandwidth utilization rate of the system is reduced and the costs of the optical module and the system are increased due to the fact that the ONUs need to adopt the burst mode to transmit the uplink data during the registration in the known registration manner of the WDM PON system are solved.

In an exemplary embodiment, in the embodiment, the ONU is indicated to send the registration information after performing the random latency via the random latency threshold value sent by the OLT. In such way, the competition efficiency of the wavelength pair during the registration of the ONU may be effectively improved, and thus the effectiveness of the registration of the ONU is guaranteed.

FIG.4 is a flowchart of another method of registering on a passive optical network provided by an embodiment of the present invention. In an exemplary embodiment, on the basis of the embodiment shown in FIG. 1, the method provided by the embodiment further includes the following step before the step S 110.

In Step S101, an OLT sends a registration indication message to an ONU, where the registration indication message includes at least one of the following information: a random latency threshold value, and a preset wavelength pair used for registration by each ONU in an optical network system.

In the embodiment, the OLT indicates, via a manner of sending the registration indication message to the ONU, the ONU in the registration state that the OLT has opened for registration. When the OLT opens for registration, a part of wavelength pairs in the system are designated for the ONU to register, i.e., the preset wavelength pair in the registration indication message. In addition, the registration indication message in the embodiment further includes the random latency threshold value for indicating a range of the random latency performed when the ONU continuously sends the registration to the OLT. In an exemplary embodiment, the ONU may perform the random latency within the range indicated by the random latency threshold value, and then continuously send the registration information to the OLT.

It should be noted that the OLT sending the registration indication message in the embodiment may refer to that the OLT sends the registration indication message to all ONUs in the registration state in the WDM PON system, i.e., all the ONUs which have a possibility to register to the OLT may receive the registration indication message, but not all ONUs receiving the registration indication message will initiate the registration.

In the embodiment, during implementation, the ONU sending the registration information to the OLT may include, for example, the first ONU and other ONUs. The manner that the OLT allocates the wavelengths, i.e., the step S120includes the following steps.

In Step S121, when the OLT correctly analyzes the registration information sent by the first ONU, a first wavelength pair is allocated to the first ONU.

In the embodiment, the first wavelength pair allocated to the first ONU by the OLT may be a wavelength pair used when the first ONU sends the registration information, or may further be another wavelength pair designated by the OLT. For example, when the first ONU sends the registration information by using the first wavelength pair and the OLT receives the complete content of the registration information sent by the first ONU and correctly analyzes it, the OLT allocates the first wavelength pair used when the first ONU sends the registration information to the first ONU for subsequent communication. For another example, when the first ONU sends the registration information by using a second wavelength pair and the OLT receives the complete content of the registration information sent by the first ONU and correctly analyzes it, the OLT designates to allocate the first wavelength pair to the first ONU, and the second wavelength pair used when the first ONU sends the registration information is used for the registration of other ONUs.

It should be noted that in any one of the above manners that the OLT allocates the wavelength pairs in the embodiment, after the OLT allocates the first wavelength pair to the first ONU, other ONUs will be stopped to be registered on the first wavelength pair, i.e., the first ONU will become an ONU in the working state after establishing a communication connection with the OLT via the first wavelength pair. The first wavelength pair used by the first ONU is no longer used in the registration, and the ONUs in the registration state may be registered according to other wavelength pairs indicated by the OLT.

In Step S122, when the OLT does not correctly analyze the registration information sent by each ONU, the OLT determines that an operation of allocating a wavelength pair is not performed.

In the embodiment, the registration information sent by a plurality of ONUs may cause a conflict at an OLT side, where the conflict may be caused due to the same time of the random latency performed by the plurality of ONUs, or may also be caused due to the unreasonable arrangement of the random latency threshold value notified at the OLT side. Under such condition, the OLT determines that the operation of allocating the wavelength pair is not performed, and may subsequently re-indicate the ONU to register by changing a registration manner.

It should be noted that the step S 121 and the step S122 in the embodiment are selectively performed, and either of them is performed according to the content of the registration information received by the OLT.

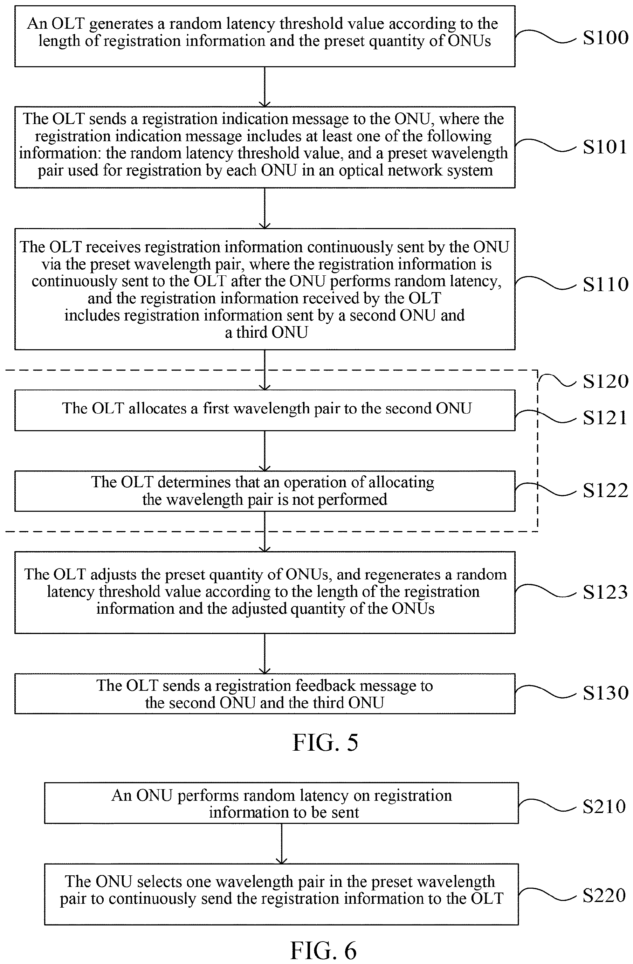

FIG.5 is a flowchart of another method of registering on a passive optical network provided by an embodiment of the present invention. In an exemplary embodiment, on the basis of the embodiment shown in FIG. 4, the method provided by the embodiment further includes the following step before the step S101.

In Step S100, an OLT generates a random latency threshold value according to a length of registration information and a preset quantity of ONUs.

In the embodiment of the present invention, the random latency threshold value in the registration indication message sent by the OLT is typically generated by the OLT side. For example, the random latency threshold value may be obtained according to an empirical value, or may be calculated by the OLT according to the length of the registration information and the preset quantity of ONUs. As mentioned above, the length of the registration information is relevant to the content of the registration information, and is usually fixed, i.e., the length of the registration information is known by the OLT side and the ONU side. The preset quantity of ONUs is a predicted number of ONUs in the registration state, and its initial value may be provided by the designer, or may be configured according to a historical value. For example, the random latency threshold value may be a product of the length of the registration information and the preset quantity of ONUs.

In the embodiment, during implementation, if the registration information received by the OLT includes the registration information sent by the second ONU and the third ONU, and the preset wavelength pair in the registration indication message includes the first wavelength pair and the second wavelength pair, the method provided by the embodiment further includes the following step after the step S120.

In Step S130, the OLT sends a registration feedback message to the second ONU and the third ONU.

In the embodiment, if the OLT performs the operation of allocating the wavelength pairs, i.e., the step S121 during this implementation includes: the OLT allocates the first wavelength pair to the second ONU, and the registration feedback information sent by the OLT includes wavelength allocation information, where the wavelength allocation information is used for indicating the second ONU to establish a communication connection with the OLT via the first wavelength pair, and the wavelength allocation information is further used for indicating the third ONU to continuously re-send the registration information to the OLT via the second wavelength pair. In addition, if the OLT determines that the operation of allocating the wavelength pair is not performed, i.e., the OLT executes the step S122, the registration feedback information sent by the OLT is used for indicating the second ONU and the third ONU to continuously re-send the registration information to the OLT. In this case, it may be not limited which wavelength pair is adopted by the second ONU and the third ONU to re-send the registration information. The first wavelength pair may be adopted, and the second wavelength pair may also be adopted.

It should be noted that the third ONU in the embodiment may refer to one or more ONUs, and generally refers to the ONUs that send the registration information to the OLT but the OLT does not successfully analyze the registration information. The second wavelength pair may also refer to one or more wavelength pairs, and generally refers to wavelength pairs contained in the registration indication message and not allocated to some ONU.

In an exemplary embodiment, the random latency threshold value in the embodiment may be generated by the OLT according to the length of the registration information and the preset quantity of ONUs, and the length of the registration information is determined, and the preset quantity of ONUs is uncertain. In other words, the current preset quantity of ONUs may be not identical with that of an actual condition. For example, the current preset quantity of ONUs is 10, but 50 ONUs need to be registered at present. That is, the current random latency threshold value does not meet the current demand that 50 ONUs perform the random latency, and thus it is very easy to cause the conflict at the OLT side. Therefore, the method provided by the embodiment may further include the following step between the step S 120 and the step S130.

In Step S 123, the OLT adjusts the preset quantity of ONUs, and regenerates a random latency threshold value according to the length of the registration information and the adjusted number of the ONUs. Therefore, the registration feedback message sent by the OLT in the step S130 of the embodiment may further include the regenerated random latency threshold value. In addition, the registration feedback message in the embodiment may further include other parameters indicating the ONU to change the sending manner, such as indicating to change a sending frequency of the ONU, etc.

In the embodiment, by adjusting the preset quantity of ONUs, the random latency threshold value indicated to the ONU is changed, so when the conflict is caused at the OLT side, the registration information is re-sent by changing the manner that the ONU sends the registration information, thereby beneficial to improving the success rate of the registration of the ONUs.

FIG.6 is a flowchart of a further still another method of registering on a passive optical network provided by an embodiment of the present invention. The method of registering on a passive optical network provided by the embodiment is applied to registration of ONUs in the WDM PON system. The method may be implemented by a device of registering on a passive optical network. The device of registering on a passive optical network is implemented via a combination manner of hardware and software. The device may be integrated into a processor of the ONU to be invoked by the processor for use. As shown in FIG. 6, the method in the embodiment may include the following steps.

In Step S210, an ONU perform random latency on registration information to be sent.

The method of registering on a passive optical network provided by the embodiment of the present invention provides a manner that ONUs are registered to an OLT in the WDM PON system. In the embodiment, the OLT does not need to open a quiet window, and may directly open for the registration. In addition, the ONUs in the embodiment are those in the registration state in the WDM PON system. In the embodiment, it is known by the ONUs that the OLT opens to the ONUs in the registration state for registration. At this moment, the ONUs that need to send the registration information may first perform the random latency on the registration information to be sent, and then perform the sending operation.

It should be noted that there may be one or more ONUs in the embodiment, and the ONUs which are in the registration state and need to send the registration information may perform the operation in the embodiment. In addition, the manner that an ONU performs the random latency in the embodiment may include, for example, the ONU performs the random latency according to default information, or the ONU performs the random latency according to indication information of the OLT.

In Step S220, the ONU selects one wavelength pair in preset wavelength pair to continuously send the registration information to the OLT.

In the embodiment, the ONU performs the random latency on the registration information to be sent, and then may adopt the wavelength pair indicated in the registration indication message to send the registration information. In an exemplary embodiment, each ONU that sends the registration information may select one wavelength pair in the preset wavelength pair via a selection manner. The wavelength pair used by each ONU to send the registration information may be a wavelength pair indicated by the OLT. After selecting one wavelength pair, the ONU continuously sends the registration information to the OLT at a certain frequency, where the registration information may also be sent via an SN message or an MAC message.

It should be noted that there may be more than one ONU that need to be registered on the same wavelength pair. If a plurality of ONUs send the registration information simultaneously, it may result in that the OLT cannot analyze the registration information correctly. Hence, different ONUs perform the random latency within a range indicated by the random latency threshold value, and then send the registration information. Usually, the time of the random latency performed by each ONU is different, so that the conflict caused by the plurality of ONUs sending the registration information simultaneously may be effectively avoided.

During the implementation of the embodiment, the time of the random latency performed by the ONU is greater than or equal to the time of sending each piece of registration information. The length of the registration information and the time for sending the registration information are fixed generally. For example, the time of the random latency performed by the ONU may be an integer multiple of the time of sending each piece of registration information. In such way, the OLT may be further guaranteed to receive complete registration information sent by one ONU more effectively, and thus the OLT may correctly analyze the registration information to implement the effectiveness for the registration of the ONU. In the embodiment, the condition in which the ONU performs the random latency and sends the registration information may also refer to the application scene shown in FIG. 3.

In the embodiment, since the OLT may receive the registration information sent by a plurality of ONUs, the registration information received by the OLT may be registration information with a complete content, or may also be registration information with an incomplete content. The condition of the registration information received by the OLT affects whether the OLT may correctly analyze the registration information sent by one of the ONUs, i.e., whether the OLT may correctly analyze the registration information is relevant to the time of the random latency performed by each ONU which sends the registration information. Therefore, the subsequent processing of the OLT is also relevant to the condition of the received registration information, i.e., the OLT performs the subsequent registration processing according to the received registration information. The registration processing includes, for example, performing the operation of allocating the wavelength pair, or determining that the operation of allocating the wavelength pair is not performed, or indicating the ONU to adopt another wavelength pair to re-initiate the registration. Same as the above embodiment, if the OLT may correctly analyze the registration information of some ONU, the OLT allocates a wavelength pair to the ONU. If the OLT does not correctly analyze the registration information sent by each ONU, the OLT determines that the operation of allocating the wavelength pair is not performed.

Compared with the known registration manner in the WDM PON, the OLT does not need to open the quiet window for the ONUs during the registration of the ONUs in the embodiment, i.e., the ONUs in the working state do not need to stop working in the quiet window. In another words, the ONUs in the registration state do not cause interference to the ONUs in the working state during the registration in the embodiment, and thus the bandwidth utilization rate may be improved. Furthermore, the ONUs in the registration state continuously send the registration information via wavelength pairs indicated by the OLT, so that the ONUs are prevented from adopting the burst mode to send uplink data during registration, and thus the bandwidth utilization rate is further improved. In addition, since the burst mode does not need to be adopted in the embodiment, the demand on the costs of the optical module and the system can be reduced.

According to the method of registering on a passive optical network provided by the embodiment, the ONU performs the random latency on the registration information to be sent, and then the ONU selects one wavelength pair in the preset wavelength pair to continuously send the registration information to the OLT. With the above manner that the ONU sends the registration information, OLT may perform the registration operation according to the received registration information. In the embodiment, the ONU continuously sends the registration information by using the designated wavelength pair through a manner of receiving the registration indication message, thereby avoiding the registration performed in a form of opening the quiet window and adopting the burst mode to send the uplink data. Therefore, the problems that the bandwidth utilization rate of the system is reduced and the costs of the optical module and the system are increased due to the fact that the ONUs need to adopt the burst mode to transmit the uplink data during the registration in the known registration manner of the WDM PON system are solved.

In an exemplary embodiment, in the embodiment, through the received random latency threshold value, the ONU performs the random latency within the range of the random latency threshold value, and then send the registration information. Therefore, the competition efficiency of the wavelength pairs during the registration of the ONUs may be effectively improved, and thus the effectiveness of the registration of the ONUs is guaranteed.

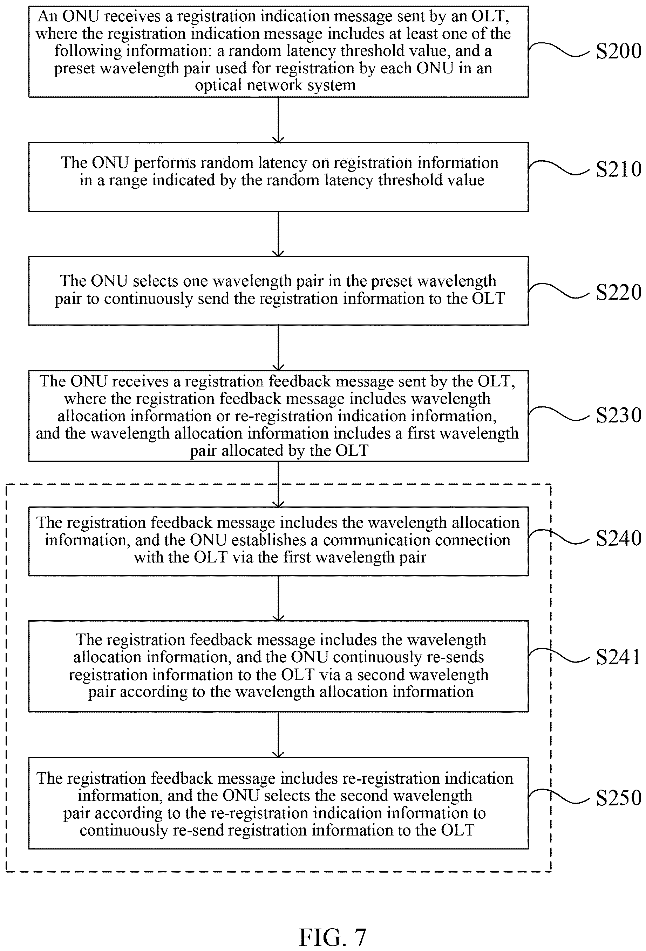

FIG. 7 is a flowchart of further another method of registering on a passive optical network provided by an embodiment of the present invention. In an exemplary embodiment, on the basis of the embodiment shown in FIG. 6, the method provided by the embodiment further includes the following step before the step S210.

In Step S200, an ONU receives a registration indication message sent by an OLT, where the registration indication message includes at least one of the following information: a random latency threshold value, and a preset wavelength pair used for registration by each ONU in an optical network system.

In the embodiment, the ONU knows that the OLT has opened to the ONU in the registration for registration via a manner of receiving the registration indication message sent by the OLT,. When the OLT opens for registration, a part of wavelength pairs in the system are used for the ONU to register, i.e., the preset wavelength pair in the registration indication message. In addition, the registration indication message in the embodiment further includes the random latency threshold value, where the random latency threshold value may be a time standard for the ONU to perform the random latency before sending the registration information.

Correspondingly, in the embodiment, the manner that the ONU performs the random latency on the registration information to be sent, i.e., the step S210, may include that the ONU performs the random latency on the registration information within a range indicated by the random latency threshold value.

It should be noted that the OLT sending the registration indication message in the embodiment may refer to that the OLT sends the registration indication message to all ONUs in the registration state in the WDM PON system, i.e., all the ONUs which have a possibility to register to the OLT may receive the registration indication message, but not all ONUs receiving the registration indication message will execute the step S210 and the step S220.

In an exemplary embodiment, the preset wavelength pair in the embodiment may include, for example, a first wavelength pair and a second wavelength pair. The method provided by the embodiment may further include the following step after the step S220.

In Step S230, the ONUs receives a registration feedback message sent by the OLT, where the registration feedback message includes wavelength allocation information or re-registration indication information, and the wavelength allocation information includes the first wavelength pair allocated by the OLT.

In the embodiment, there may be more than one ONU that sends the registration information to the OLT. On one hand, if the OLT correctly analyzes the registration information of some ONU, the registration feedback message includes the wavelength allocation information including the first wavelength pair allocated by the OLT. The registration information that the OLT receives and may correctly analyze may be sent by the ONU in the embodiment or may be sent by other ONUs, i.e., the wavelength allocation information may indicate to allocate the first wavelength pair to the ONU in the embodiment and may also indicate to allocate the first wavelength pair to other ONUs. On the other hand, if the OLT does not correctly analyze the registration information sent by each ONU, the registration feedback message includes the re-registration indication information.

In an application scene of the embodiment, the registration feedback message includes the wavelength allocation information. In a possible implementation manner of the application scene, the method provided by the embodiment may include the following step after the step S230.

In Step S240, the ONU establishes a communication connection with the OLT via the first wavelength pair.

In the embodiment, the ONU is an ONU to which the OLT allocates the wavelength pair; and moreover, the first wavelength pair in the wavelength allocation information may be a wavelength pair used when the ONU sends the registration information, or another wavelength pair designated by the OLT. The application scene that has been described in the above embodiments will not be repeated here.

In a possible implementation manner of the application scene, the OLT allocates the first wavelength pair to other ONUs, i.e., after the step S230, the method provided by the embodiment may further include the following step.

In Step S241, the ONU continuously re-sends the registration information to the OLT via the second wavelength pair according to the wavelength allocation information.

In the embodiment, although the OLT allocates the first wavelength pair, the allocation object is other ONUs sending the registration information. Therefore, in the embodiment, upon the reception of the registration feedback message, the ONU may adopt an unallocated wavelength pair, i.e., the second wavelength pair, to re-send the registration information according to the wavelength allocation information. In the embodiment, the manner that the ONU continuously re-sends the registration information to the OLT is the same as the above-mentioned manner for sending the registration information, and the registration information also needs to be continuously sent after the random latency is performed.

It should be noted that no matter which ONU is allocated to the first wavelength pair in the wavelength allocation information, ONUs not allocated with the wavelength pairs will be stopped to be registered on the first wavelength pair. In another words, any ONU will become an ONU in the working state after establishing the communication connection with the OLT via the first wavelength pair. The first wavelength pair used by the ONU in the working state is no longer used for the registration, and the ONUs in the registration state may be registered according to other wavelength pairs indicated by the OLT. In addition, in the embodiment, the second wavelength pair may be one or more wavelength pairs, and generally refers to wavelength pairs contained in the registration indication message and not allocated to some ONU.

In another application scene of the embodiment, the registration feedback message includes the re-registration indication information. Correspondingly, after the step S230, the method provided by the embodiment may further include the following step.

In Step S250, the ONU selects the second wavelength pair according to the re-registration indication information to continuously re-send the registration information to the OLT.

In the embodiment, the registration information sent by a plurality of ONUs may cause a conflict at an OLT side, where the conflict may be caused due to the same time of the random latency performed by the plurality of ONUs, and may also be caused to the unreasonable arrangement of the random latency threshold value notified at the OLT side. Under such condition, the OLT temporarily does not perform the operation of allocating the wavelength pair, and may subsequently re-indicate the ONU to register by changing a registration manner. In addition, in the embodiment, the manner that the ONU continuously re-sends the registration information to the OLT is the same as the above-mentioned manner for sending the registration information, and the registration information also needs to be continuously sent after the random latency is performed.

It should be noted that the step S240, the step S241 and the step S250 in the embodiment are selectively performed, and one of them is performed according to the content of the registration feedback message received by the ONU.

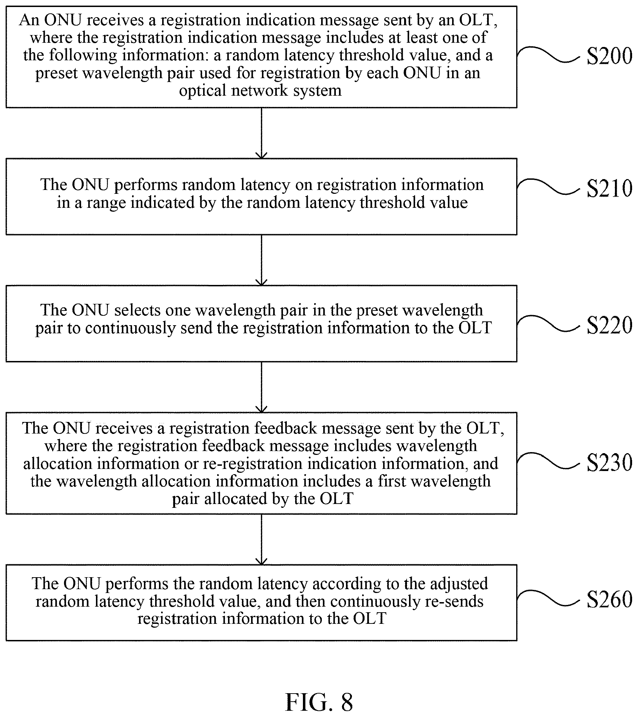

FIG.8 is a flowchart of further another method of registering on a passive optical network provided by an embodiment of the present invention. In the embodiment, the random latency threshold value may also be generated according to the length of the registration information and the preset quantity of ONUs. Correspondingly, if the conflict is caused when the OLT receives the registration information, the random latency threshold value may also be adjusted by adjusting the preset quantity of ONUs, i.e., the registration feedback message received by the ONUs in the embodiment includes the re-registration indication information and the random latency threshold value adjusted by the OLT. Therefore, the method provided by the embodiment further includes the following step after the step S230.

In Step S260, the ONU performs the random latency according to the adjusted random latency threshold value, and then continuously re-sends the registration information to the OLT. Similarly, the manner that the ONU continuously re-sends the registration information to the OLT is the same as the above-mentioned manner for sending the registration information, and the registration information also needs to be continuously sent after the random latency is performed. In addition, the registration feedback message in the embodiment may further include other parameters indicating the ONU to change the sending manner, such as indicating to change a sending frequency of the ONU, etc.

In the embodiment, by carrying the adjusted random latency threshold value in the registration feedback message received by the ONU, so when the conflict is caused at the OLT side, the registration information is re-sent by changing the manner that the ONU sends the registration information, thereby beneficial to improving the success rate of the registration of the ONUs.

According to an embodiment of the present invention, also provided is a method of registering on a passive optical network. The method includes: an ONU performs random latency on registration information to be sent; the ONU selects one wavelength pair in a preset wavelength pair to continuously send the registration information to the OLT; and the OLT performs a registration processing according to the received registration information.

That the OLT performs a registration processing according to the received registration information includes: when the OLT correctly analyzes the registration information sent by a first ONU, a first wavelength pair is allocated to the first ONU, where the first wavelength pair is a wavelength pair used when the first ONU sends the registration information, or another wavelength pair designated by the OLT;
when the OLT does not correctly analyze registration information sent by each ONU, the OLT determines that an operation of allocating a wavelength pair is not performed.

In an exemplary embodiment, before the ONU performs the random latency on the registration information to be sent, the method further includes: the OLT sends a registration indication message to the ONU, where the registration indication message includes at least one of the following information: a random latency threshold value, and the preset wavelength pair used for registration by each ONU in an optical network system.

That an ONU performs random latency on registration information to be sent includes: the ONU performs the random latency on the registration information within a range indicated by the random latency threshold value.

In an exemplary embodiment, before the OLT sends the registration indication message to the ONU, the method further includes: the OLT generates the random latency threshold value according to the length of the registration information and a preset quantity of ONUs.

The registration information received by the OLT includes registration information sent by a second ONU and a third ONU; the preset wavelength pair includes a first wavelength pair and a second wavelength pair. After the OLT performs the registration processing, the method further includes: the OLT sends a registration feedback message to the second ONU and the third ONU, where the registration feedback message includes wavelength allocation information or re-registration indication information, and the wavelength allocation information includes the first wavelength pair allocated by the OLT.

In an exemplary embodiment, if the OLT allocates the first wavelength pair to the second ONU when performing the registration processing, the registration feedback message includes the wavelength allocation information, and the method further includes: the second ONU establishes a communication connection with the OLT via the first wavelength pair, and the third ONU continuously re-sends the registration information to the OLT via the second wavelength pair; and
if the OLT determines that the operation of allocating the wavelength pair is not performed when performing the registration processing, the registration feedback message includes the re-registration indication information, and the method further includes: the second ONU and the third ONU continuously re-send the registration information to the OLT according to the registration feedback message.

In an exemplary embodiment, after the OLT determines that the operation of allocating the wavelength pair is not performed and before the registration feedback message is sent, the method further includes: the OLT adjusts the preset quantity of ONUs, and regenerates a random latency threshold value according to the length of the registration information and the adjusted quantity of the ONUs, where the registration feedback message sent by the OLT further includes the regenerated random latency threshold value; and the ONU performs the random latency according to the adjusted random latency threshold value, and then continuously re-sends the registration information to the OLT.

In an exemplary embodiment, time of the random latency performed by the ONU is greater than or equal to time of sending each piece of registration information; or the time of the random latency performed by the ONU is an integer multiple of the time of sending each piece of registration information.

Application scenes and application manners of a data transmission method provided by the embodiments of the present application will be described below in detail via some examples.

### First Example

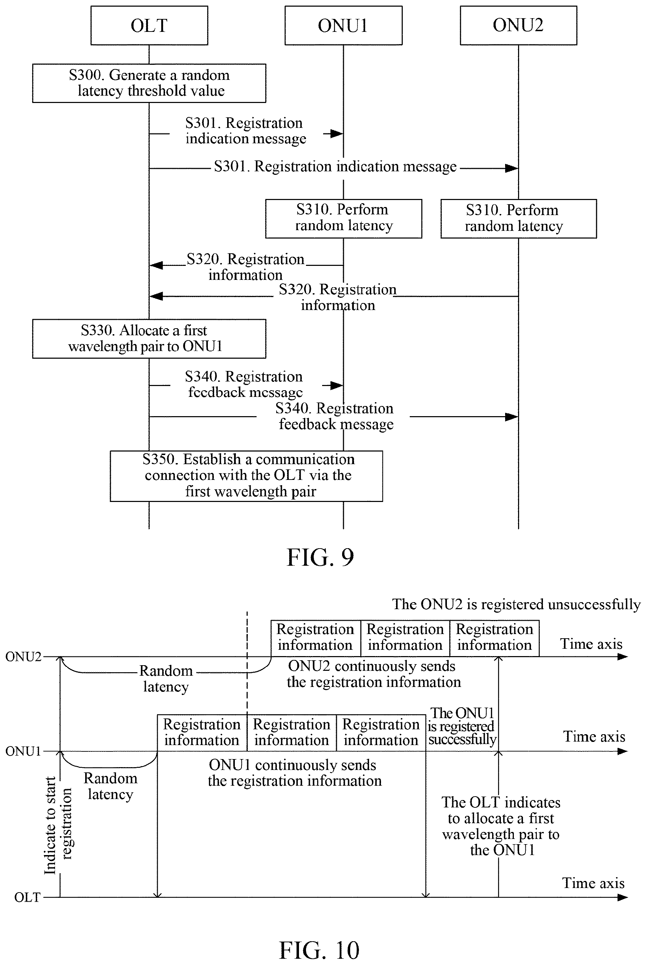

FIG.9 is an interaction flowchart of a method of registering on a passive optical network provided by a first example of the present application. The application scene of the embodiment may be, for example, the ONUs in the registration state in the WDM PON system includes an ONU1 and an ONU2. The method in the embodiment shown in FIG. 9 includes the following steps.

In Step S310, the ONU1 and the ONU2 respectively perform random latency on registration information to be sent.

In Step S320, the ONU1 and the ONU2 respectively select one wavelength pair in preset wavelength pair to continuously send the registration information to the OLT. In the embodiment, the registration information may also be sent via an SN message or an MAC message.

In Step S330, the OLT performs a registration processing according to the received registration information.

In the embodiment, the manner that the OLT performs the registration processing is the same as that of the above embodiment. If the OLT correctly analyzes the registration information sent by the ONU1, a first wavelength pair is allocated to the ONU1. If OLT does not correctly analyze the registration information sent by the ONU1 and the ONU2, the OLT determines that an operation of allocating the wavelength pair is not performed.

As shown in FIG. 10, the FIG. 10 is a schematic diagram of an application scene in the method of registering on a passive optical network provided by the embodiment shown in FIG. 9. In FIG. 10, the time of the random latency performed by the ONU1 is short, for example, the time is time required for sending the registration information once. The time of the random latency performed by the ONU2is long, for example, the time is greater than the time required for sending the registration information twice. That is, the registration information sent by the ONU1 and the ONU2 does not cause the conflict at the OLT side, and the OLT may receive and correctly analyze the registration information sent by the ONU1. Therefore, the OLT may allocate the wavelength pair to the ONU1, i.e., the step S330 in the embodiment: the first wavelength is allocated to the ONU1. Similarly, in the embodiment, the first wavelength pair may be a wavelength pair used when the ONU1 sends the registration information, or may further be another wavelength pair designated to the ONU1 by the OLT.

In Step S340, the OLT sends a registration feedback message to the ONU1 and the ONU2.

In the embodiment, the registration feedback message may include wavelength allocation information indicating that the ONU1 is registered successfully and the ONU2 is registered unsuccessfully.

In Step S350, the ONU1 establishes a communication connection with the OLT via the first wavelength pair.

Besides, in the embodiment, the ONU2 may continuously send the registration information via a second wavelength pair subsequently, or may temporarily stop to send the registration information according to an indication of the OLT.

In an exemplary embodiment, the embodiment shown in FIG. 9 may further include the following steps before the step S310.

In Step S300, the OLT generates a random latency threshold value according to the length of the registration information and a preset quantity of ONUs.

In Step S301, the OLT sends a registration indication message to the ONU1 and the ONU2. In the embodiment, the registration indication message also includes at least one of the following information: the random latency threshold value, and the preset wavelength pair used by each ONU for registration in an optical network system.

In the embodiment, the OLT notifies that preset wavelength pairs of the ONU1 and the ONU2 may be used for registration. For example, the OLT indicates that the first wavelength pair and the second wavelength pair are used for registration and indicates a range of the random latency threshold value, to open the registration.

In the embodiment, during implementation, the step S310 may include that the ONU1 and the ONU2 respectively perform the random latency on the registration information to be sent within a range indicated by the random latency threshold value.

### Second Example

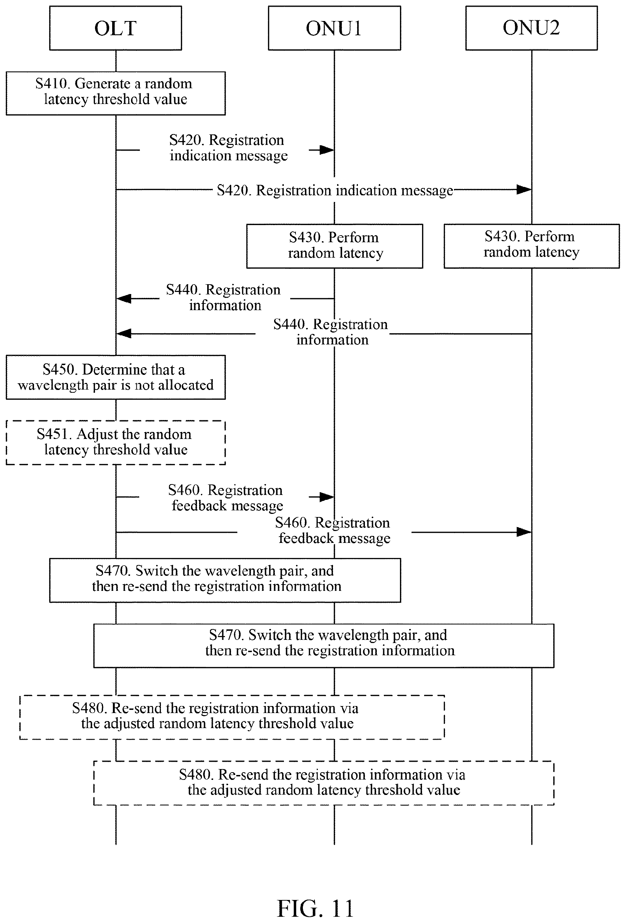

FIG. 11 is an interaction flowchart of a method of registering on a passive optical network provided by a second example of the present application. The application scene of the embodiment may be, for example, the ONUs in the registration state in the WDM PON system also includes an ONU1 and an ONU2. The method in the embodiment shown in FIG. 11 includes the following steps.

In Step S410, the OLT generates a random latency threshold value according to the length of the registration information and a preset quantity of ONUs.

In Step S420, the OLT sends a registration indication message to the ONU1 and the ONU2. In the embodiment, the registration indication message also includes at least one of the following information: the random latency threshold value, and the preset wavelength pair used for registration by each ONU in an optical network system.

In the embodiment, the OLT notifies that one or more wavelength pairs of the ONU1 and the ONU2 may be used for registration, for example, the OLT indicates that the first wavelength pair and the second wavelength pair are used for registration and indicates a range of the random latency threshold value, to open the registration.

In Step S430, the ONU1 and the ONUT2 respectively perform random latency within a range indicated by the random latency threshold value.

In Step S440, the ONU1 and the ONU2 respectively select one wavelength pair to continuously send the registration information to the OLT. In the embodiment, the registration information may also be sent via an SN message or an MAC message.

In Step S450, the OLT determines that an operation of allocating the wavelength pairs is not performed according to the received registration information.

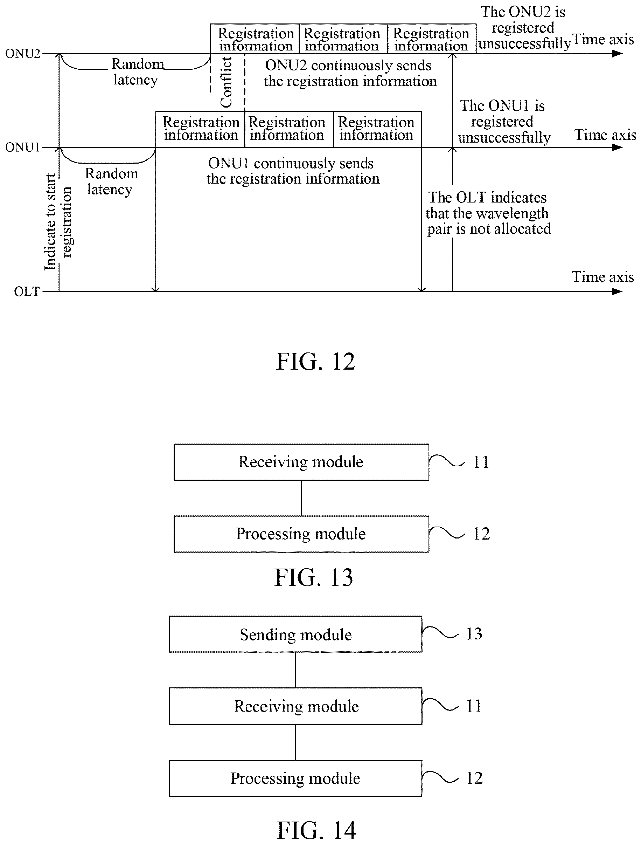

As shown in FIG. 12, the FIG. 12 is a schematic diagram of an application scene in the method of registering on a passive optical network provided by the embodiment shown in FIG. 11. In FIG. 12, a difference between the time of the random latency performed by the ONU1and the time of the random latency performed by the ONU2 is small, i.e., when the OLT does not receive the complete registration information sent by the ONU1, the ONU2 starts to send the registration information, so the conflict of the registration information is caused at the OLT side. As a result, the OLT cannot correctly analyze the registration information sent by each ONU, and the OLT cannot allocate the wavelength pair to any ONU.

In Step S460, the OLT sends a registration feedback message to the ONU1 and the ONU2.

In the embodiment, the registration feedback message may include re-registration indication information indicating that the ONU1 and the ONU2 both are registered unsuccessfully.

In an exemplary embodiment, in the embodiment, after the ONU1 and the ONU2 are registered unsuccessfully, the following step may further be performed.

In Step S470, the ONU1 and the ONU2 switch the wavelength pairs and then continuously re-send the registration information to the OLT.

It should be noted that in the embodiment, the manner that the ONUs continuously re-send the registration information to the OLT is the same as the above-mentioned manner for sending the registration information, and the registration information also needs to be continuously sent after the random latency is performed. In other words, the execution in step S470 may be referred to the above step S430 and the step S440.

In an exemplary embodiment, in the embodiment, after the OLT executes the step S450, the following step may further be performed.

In Step S451, the OLT adjusts the random latency threshold value.

In the embodiment, if the conflict is caused when the OLT receives the registration information, the random latency threshold value may also be adjusted by adjusting the preset quantity of ONUs. Correspondingly, the registration feedback message sent by the OLT in the step S460 of the embodiment may further include the adjusted random latency threshold value.

Correspondingly, after the ONU1 and the ONUT2 receive the registration feedback message, the following steps may further be performed.

In Step S480, the ONU1 and the ONU2 perform the random latency according to the adjusted random latency threshold value, and then continuously re-send the registration information to the OLT.

It should be noted that in the embodiment, the manner that the ONUs re-send the registration information is the same as the above-mentioned manner for sending the registration information, and the registration information also needs to be continuously sent after the random latency is performed. In other words, the execution of step S480 may be referred to the above step S430 and the step S440.

FIG. 13 is a structural schematic diagram of a device of registering on a passive optical network provided by an embodiment of the present invention. The device of registering on a passive optical network provided by the embodiment is applied to registration of ONUs in the WDM PON system. The device of registering on a passive optical network is implemented via a combination manner of hardware and software. The device may be integrated into a processor of an OLT to be invoked by the processor for use. As shown in FIG. 13, the device of registering on a passive optical network in the embodiment includes: a receiving module 11 and a processing module 12.

Herein, the receiving module 11 is configured to be capable of receiving registration information continuously sent by an ONU via a preset wavelength pair, where the registration information is continuously sent to the OLT after the ONU performs random latency.

The device of registering on a passive optical network provided by the embodiment of the present invention is a device configured for the ONU to be registered to an OLT in the WDM PON system. In the embodiment, the OLT does not need to open a quiet window and may directly open for registration. In addition, the ONUs in the embodiment are those in a registration state in the WDM PON system. In the embodiment, the OLT has opened to the ONUs in the registration state for registration, i.e., these ONUs may adopt the preset wavelength pairs to send the registration information. In an exemplary embodiment, each ONU that sends the registration information may select one wavelength pair via a selection manner, and the wavelength pair used by the ONU to send the registration information may be a wavelength pair indicated to the ONU by the OLT. After selecting one wavelength pair, the ONU continuously sends the registration information to the OLT at a certain frequency, where the registration information is, for example, sent via an SN message or an MAC message.

It should be noted that there may be more than one ONU that need to be registered on the same wavelength pair. If a plurality of ONUs send the registration information simultaneously, it may result in that the OLT cannot analyze the registration information correctly. Hence, through a random latency threshold value, each ONU is indicated to perform the random latency within a range of the random latency threshold value, and then sends the registration information. Usually, the time of the random latency performed by each ONU is different, so that the conflict caused by the plurality of ONUs sending the registration information simultaneously may be effectively avoided.

During the implementation of the embodiment, the time of the random latency performed by the ONU is greater than or equal to the time of sending each piece of registration information. For example, the time of the random latency performed by the ONU may be an integer multiple of the time of sending each piece of registration information. In the embodiment, the manner that the ONU performs the random latency and sends the registration information may also be referred to the application scene shown in FIG. 3.

The processing module 12 connected with the receiving module 11 is configured to be capable of performing a registration processing according to the registration information received by the receiving module 11.

In the embodiment, since the receiving module 11 may receive the registration information sent to the OLT by a plurality of ONUs, the registration information received by the receiving module 11 may be registration information with a complete content, or may be registration information with an incomplete content. The condition in which the receiving module 11 receives the registration information affects whether the processing module 12 may correctly analyze the registration information sent by one of the ONUs, i.e., whether the processing module 12 may correctly analyze the registration information is relevant to the time of the random latency performed by each ONU sending the registration information. Therefore, the subsequent processing of the OLT is also relevant to the condition of the received registration information, i.e., the OLT performs the subsequent registration processing according to the received registration information. The registration processing includes, for example, performing the operation of allocating the wavelength pair, or determining that the operation of allocating the wavelength pair is not performed, or indicating the ONU to adopt another wavelength pair to re-initiate the registration. During implementation, if the processing module 12 may correctly analyze the registration information of some ONU, a wavelength pair is allocated to the ONU. If the processing module 12 does not correctly analyze the registration information sent by each ONU, it is determined that the operation of allocating the wavelength pair is not performed.

The device of registering on a passive optical network provided by the embodiment of the present invention is configured to implement the method of registering on a passive optical network provided by the embodiment shown in FIG. 2. The device of registering on a passive optical network is provided with corresponding functional modules. The implementation principle and the technical effect of the device and the method are similar, and will not be repeated here.

FIG.14 is a structural schematic diagram of another device of registering on a passive optical network provided by an embodiment of the present invention. In an exemplary embodiment, on the basis of the embodiment shown in FIG. 13, the device of registering on a passive optical network in the embodiment further includes: a sending module 13 connected with the receiving module 11, configured to be capable of sending a registration indication message to the ONU before the receiving module 11 receives the registration information continuously sent by the ONU via the preset wavelength pair. The registration indication message includes at least one of the following information: a random latency threshold value, and the preset wavelength pair used for registration by each ONU in an optical network system.

In the embodiment, the sending module 13 indicates the ONU in the registration state via a manner of sending the registration indication message to the ONU that the OLT has opened for the registration. When the OLT opens for registration, a part of wavelength pairs in the system are designated for the ONU to register, i.e., the preset wavelength pair in the registration indication message. In addition, the registration indication message in the embodiment further includes the random latency threshold value used for indicating a range of the random latency performed when the ONU continuously sends the registration to the OLT. In an exemplary embodiment, the ONU may perform the random latency within the range indicated by the random latency threshold value, and then continuously send the registration information to the OLT.

It should be noted that the sending module 13 sending the registration indication message in the embodiment may refer to that the sending module 13 sends the registration indication message to all ONUs in the registration state in the WDM PON system. In other words, all ONUs which have a possibility to register to the OLT may receive the registration indication message, but not all ONUs receiving the registration indication message will initiate the registration.

During implementation of the example shown in FIG. 13, the ONU that sends the registration information to the OLT includes, a first ONU and other ONUs. On one hand, the manner that the processing module 12 performs the registration processing includes: the processing module 12 is configured to, when correctly analyzing the registration information received by the receiving module 11 and sent by the first ONU, allocate a first wavelength pair to the first ONU. In the embodiment, the first wavelength pair allocated to the first ONU by the processing module 12 may be a wavelength pair used when the first ONU sends the registration information, or may further be another wavelength pair designated by the OLT. The manner that the processing module 12 allocates the first wavelength pair has been described in the above embodiments and thus will not be repeated here. It should be noted that in any one of the above manners of the processing module 12 allocating the wavelength pair in the embodiment, after the processing module 12 allocates the first wavelength pair to the first ONU, other ONUs will be stopped to be registered on the first wavelength pair. That is, the first ONU will become an ONU in the working state after establishing the communication connection with the OLT via the first wavelength pair, the first wavelength pair used by the first ONU is no longer used for the registration, and the ONUs in the registration state may be registered according to other wavelength pairs indicated by the OLT.

On the other hand, the manner that the processing module 12 performs the registration processing includes: the processing module 12 is configured to, when the registration information received by the receiving module 11 and sent by each ONU is not correctly analyzed, determine that an operation of allocating wavelength pair is not performed. In the embodiment, the registration information sent by a plurality of ONUs may cause a conflict at an OLT side. In such case, the processing module 12 determines that the operation of allocating the wavelength pair is not performed, and may re-indicate the ONU to register by changing the registration manner.

The device of registering on a passive optical network provided by the embodiment of the present invention is configured to implement the method of registering on a passive optical network provided by the embodiment shown in FIG. 4. The device of registering on a passive optical network is provided with corresponding functional modules. The implementation principle and the technical effect of the device and the method are similar and will not be repeated here.

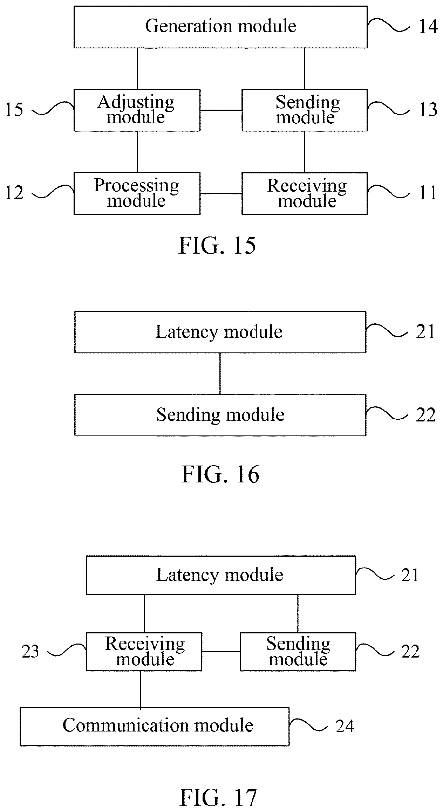

FIG. 15 is a structural schematic diagram of another device of registering on a passive optical network provided by an embodiment of the present invention. In an exemplary embodiment, on the basis of the embodiment shown in FIG. 14, the device of registering on a passive optical network in the embodiment further includes: a generation module 14 connected with the sending module 13, configured to be capable of generating the random latency threshold value according to the length of the registration information and the preset quantity of ONUs before the sending module 13 sends the registration indication message to the ONU.

In the embodiment of the present application, the random latency threshold value in the registration indication message sent by the sending module 13 is typically generated by the OLT side. For example, the random latency threshold value may be obtained according to an empirical value, or may be calculated by the generation module 14 according to the length of the registration information and the preset quantity of ONUs. For example, the random latency threshold value may be a product of the length of the registration information and the preset quantity of ONUs.

During implementation of the embodiment, if the registration information received by the receiving module 11 includes registration information sent by a second ONU and a third ONU, and the preset wavelength pair in the registration indication message includes the first wavelength pair and a second wavelength pair, the sending module 13 in the embodiment is further configured to be capable of sending a registration feedback message to the second ONU and the third ONU after the processing module 12 performs the registration processing. In an exemplary embodiment, if the processing module 12 allocates the first wavelength pair to the second ONU, the registration feedback message includes wavelength allocation information. Where the wavelength allocation information is used for indicating the second ONU to establish a communication connection with the OLT via the first wavelength pair, and the wavelength allocation information is further used for indicating the third ONU to continuously re-send the registration information to the OLT via the second wavelength pair. If the processing module 12 determines that the operation of allocating the wavelength pairs is not performed, the registration feedback message is used for indicating the second ONU and the third ONU to continuously re-send the registration information to the OLT. In this case, it may be not limited which wavelength pair is adopted by the second ONU and the third ONU to re-send the registration information. The first wavelength pair may be adopted, or the second wavelength pair may be adopted.

It should be noted that the third ONU in the embodiment may refer to one or more ONUs, and generally refers to ONUs that send the registration information to the OLT but the OLT does not successfully analyze the registration information. The second wavelength pair may also be one or more wavelength pairs, and generally refers to wavelength pairs contained in the registration indication message and not allocated to some ONU.

In an exemplary embodiment, in the embodiment, the random latency threshold value may be generated by the OLT according to the length of the registration information and the preset quantity of ONUs, and the preset quantity of ONUs is uncertain. Thus the device of registering on a passive optical network provided by the embodiment may further includes: an adjusting module 15, respectively connected with the processing module 12, the sending module 13 and the generation module 14. The adjusting module 15 is configured to be capable of adjusting the preset quantity of ONUs after the processing module 12 determines that the operation of allocating the wavelength pair is not performed and before the sending module 13 sends the registration feedback message. Correspondingly, the generation module 14 is further configured to be capable of regenerating a random latency threshold value according to the length of the registration information and the number of the ONUs adjusted by the adjusting module 15. The registration feedback message sent by the sending module 13 further includes the regenerated random latency threshold value. In addition, the registration feedback message in the embodiment may further include other parameters indicating the ONU to change the sending manner, such as indicating to change a sending frequency of the ONU, etc.

The device of registering on a passive optical network provided by the embodiment of the present invention is used for implementing the method of registering on a passive optical network provided by the embodiment shown in FIG. 5. The device of registering on a passive optical network is provided with corresponding functional modules. The implementation principle and the technical effect of the device and the method are similar and will not be repeated here.

During implementation, the sending module 13 and the receiving module 11 in the embodiments shown in FIG. 13 and FIG. 15 may be implemented via a transceiver of the OLT; and the processing module 12, the generation module 14 and the adjusting module 15 may be implemented via the processor of the OLT. The processor may be, for example, a Central Processing Unit (abbreviated as CPU), or an Application Specific Integrated Circuit (abbreviated as ASIC), or one or more integrated circuits for completing the implementation of the embodiments of the present invention.

FIG. 16 is a structural schematic diagram of a further still another device of registering on a passive optical network provided by an embodiment of the present invention. The device of registering on a passive optical network provided by the embodiment is applied to registration of ONUs in a WDM PON system. The device of registering on a passive optical network is implemented via a combination manner of hardware and software. The device may be integrated into a processor of the ONU to be invoked by the processor for use. As shown in FIG. 16, the device of registering on a passive optical network in the embodiment includes: a latency module 21 and a sending module 22.

The latency module 21 is configured to be capable of performing random latency on registration information to be sent.

The device of registering on a passive optical network provided by the embodiment of the present invention is an device for ONUs to be registered to an OLT in a WDM PON system. In the embodiment, the OLT does not need to open a quiet window and may directly open for registration. In addition, the ONUs in the embodiment are those in a registration state in the WDM PON system. In the embodiment, it is known for the ONUs that the OLT opens to the ONUs in the registration state for registration. At this moment, the latency module 21 of the ONU that needs to send the registration information may first perform the random latency on the registration information to be sent, and then perform the sending operation.

It should be noted that there may be one or more ONUs in the embodiment. The ONUs which are in the registration state and need to send the registration information all may perform the operation in the embodiment. In addition, the manner that the latency module 21 performs the random latency in the embodiment may be, for example, that the latency module 21 performs the random latency according to default information, or the latency module 21 performs the random latency according to indication information of the OLT.

The sending module 22 connected with the latency module 21 is configured to be capable of selecting one wavelength pair in preset wavelength pair to continuously send the registration information to an OLT.

In the embodiment, the ONU performs the random latency on the registration information to be sent, and then the sending module 22 may adopt a wavelength pair indicated in the registration indication message to send the registration information. In an exemplary embodiment, each ONU that sends the registration information may select one wavelength pair in the preset wavelength pair via a selection manner, and the wavelength pair used by the sending module 22 to send the registration information may be a wavelength pair indicated to the ONU by the OLT. After selecting one wavelength pair, the ONU continuously sends the registration information to the OLT at a certain frequency, where the registration information may also be sent via an SN message or an MAC message.

It should be noted that there may be more than one ONU that need to be registered on the same wavelength pair. If a plurality of ONUs send the registration information simultaneously, it may result in that the OLT cannot analyze the registration information correctly. Hence, through a random latency threshold value, each ONU is indicated to perform the random latency within a range of the random latency threshold value, and then sends the registration information. Usually, the time of the random latency performed by each ONU is different, so that the conflict caused by the plurality of ONUs sending the registration information simultaneously may be effectively avoided.

During implementation of the embodiment, the time of the random latency performed by the latency module 21 is greater than or equal to the time of sending each piece of registration information. For example, the time of the random latency performed by the latency module 21 may be an integer multiple of the time of sending each piece of registration information. In the embodiment, the manner that the latency module 21 performs the random latency and the sending module 22 sends the registration information may also be referred to the application scene shown in FIG. 3.

In the embodiment, since the OLT may receive the registration information sent by a plurality of ONUs, the registration information received by the OLT may be registration information with a complete content, or may also be registration information with an incomplete content. The condition of the registration information received by the OLT affects whether the OLT may correctly analyze the registration information sent by one of the ONUs, i.e., whether the OLT may correctly analyze the registration information is relevant to the time of the random latency performed by each ONU which sends the registration information. Therefore, the subsequent processing of the OLT is also relevant to the condition of the received registration information, i.e., the OLT performs the subsequent registration processing according to the received registration information. The registration processing includes, for example, performing the operation of allocating the wavelength pair, or determining that the operation of allocating the wavelength pair is not performed, or indicating the ONU to adopt another wavelength pair to re-initiate the registration. Same as the above embodiment, if the OLT may correctly analyze the registration information of an ONU, a wavelength pair is allocated to the ONU. If the OLT does not correctly analyze the registration information sent by each ONU, the OLT determines that the operation of allocating the wavelength pair is not performed.

The device of registering on a passive optical network provided by the embodiment of the present invention is configured to implement the method of registering on a passive optical network provided by the embodiment shown in FIG. 6. The device of registering on a passive optical network is provided with corresponding functional modules. The implementation principle and the technical effect of the device and the method are similar and will not be repeated here.

FIG. 17 is a structural schematic diagram of a still another device of registering on a passive optical network provided by an embodiment of the present invention. In an exemplary embodiment, on the basis of the structure of the device shown in FIG. 16, the device provided by the embodiment further includes: a receiving module 23 connected with latency module 21. The receiving module 23 is configured to be capable of receiving a registration indication message sent by the OLT before the latency module 21 performs the random latency on the registration information to be sent. The registration indication message includes at least one of the following information: a random latency threshold value, and the preset wavelength pair used for registration by each ONU in an optical network system.

Correspondingly, in the embodiment, the manner that the latency module 21 performs the random latency on the registration information to be sent may include that the latency module 21 is configured to be capable of performing the random latency on the registration information within a range indicated by the random latency threshold value received by the receiving module 23.

It should be noted that the OLT sending the registration indication message in the embodiment may refer to that the OLT sends the registration indication message to all ONUs in the registration state in the WDM PON system, i.e., all the ONUs which have a possibility to register to the OLT may receive the registration indication message, but not all ONUs receiving the registration indication message will initiate the registration.

In an exemplary embodiment, the preset wavelength pair in the embodiment include, for example, a first wavelength pair and a second wavelength pair. During the implementation of the embodiment shown in FIG. 17, the receiving module 23 is further connected with the sending module 22. The receiving module 23 is further configured to be capable of receiving a registration feedback message sent by the OLT after the sending module 22 selects one wavelength pair in the preset wavelength pair to continuously send the registration information to the OLT. Where the registration feedback message includes wavelength allocation information or re-registration indication information, and the wavelength allocation information includes the first wavelength pair allocated by the OLT.

In the embodiment, there may be more than one ONU that sends the registration information to the OLT. On one hand, if the OLT correctly analyzes the registration information of some ONU, the registration feedback message includes the wavelength allocation information including the first wavelength pair allocated by the OLT. The registration information that the OLT receives and may correctly analyze may be sent by the ONU in the embodiment or may be sent by other ONUs, i.e., the wavelength allocation information may indicate to allocate the first wavelength pair to the ONU in the embodiment and may also indicate to allocate the first wavelength pair to other ONUs. On the other hand, if the OLT does not correctly analyze the registration information sent by each ONU, the registration feedback message includes the re-registration indication information.

In an application scene of the embodiment, the registration feedback message includes the wavelength allocation information. In a possible implementation manner of the application scene, the device of registering on a passive optical network further includes: a communication module 24 connected with the receiving module 23. The communication module 24 is configured to be capable of establishing a communication connection with the OLT via the first wavelength pair after the receiving module 23 receives the registration feedback message sent by the OLT. Where the first wavelength pair is a wavelength pair used when the ONU sends the registration information, or another wavelength pair designated by the OLT.

In a possible implementation manner of the application scene, the OLT allocates the first wavelength pair to other ONUs. In the embodiment, the sending module 22 is further configured to be capable of re-sending continuously the registration information to the OLT via the second wavelength pair according to the wavelength allocation information received by the receiving module 23 after the receiving module 23 receives the registration feedback message sent by the OLT. In the embodiment, the manner that the sending module 22 re-sends the registration information is the same as the above-mentioned manner for sending the registration information. The registration information also needs to be continuously sent by the sending module 22 after the random latency is performed by the latency module 21.

It should be noted that no matter which ONU is allocated to the first wavelength pair in the wavelength allocation information, ONUs not allocated with the wavelength pairs will be stopped to be registered on the first wavelength pair. In another words, any ONU will become an ONU in the working state after establishing the communication connection with the OLT via the first wavelength pair. The first wavelength pair used by the ONU in the working state is no longer used for the registration, and the ONUs in the registration state may be registered according to other wavelength pairs indicated by the OLT. In addition, in the embodiment, the second wavelength pair may be one or more wavelength pairs, and generally refers to wavelength pairs contained in the registration indication message and not allocated to some ONU.

In another application scene of the embodiment, the registration feedback message includes the re-registration indication information. Correspondingly, in the embodiment, the sending module 22 is further configured to be capable of selecting the second wavelength pair to continuously re-send the registration information to the OLT according to the re-registration indication information received by the receiving module 23 after the receiving module 23 receives the registration feedback message sent by the OLT. Moreover, in the embodiment, the manner that the sending module 22 re-sends the registration information is the same as the above-mentioned manner for sending the registration information, and the registration information also needs to be continuously sent by the sending module 22 after the random latency is performed by the latency module 21.

The device of registering on a passive optical network provided by the embodiment of the present invention is configured to implement the method of registering on a passive optical network provided by the embodiment shown in FIG. 7. The device of registering on a passive optical network is provided with corresponding functional modules. The implementation principle and the technical effect of the device and the method are similar, and will not be repeated here.

In an exemplary embodiment, the random latency threshold value in the embodiment may also be generated by the OLT according to the length of the registration information and the preset quantity of ONUs. Correspondingly, of the conflict is caused when the OLT receives the registration information, the random latency threshold value may also be adjusted by adjusting the preset quantity of ONUs. In another words, the registration feedback message received by the receiving module 23 in the embodiment further includes the random latency threshold value adjusted by the OLT. Correspondingly, the latency module 21 is further configured to be capable of performing the random latency according to the adjusted random latency threshold value received by the receiving module 23. The sending module 22 is further configured to continuously re-send the registration information to the OLT after the latency module 21 performs the random latency. In addition, the registration feedback message in the embodiment may further include other parameters indicating the ONU to change the sending manner, such as indicating to change a sending frequency of the ONU, etc.

The device of registering on a passive optical network provided by the embodiment of the present invention is configured to implement the method of registering on a passive optical network provided by the embodiment shown in FIG. 8. The device of registering on a passive optical network is provided with corresponding functional modules. The implementation principle and the technical effect of the device and the method are similar and will not be repeated here.

During implementation, the receiving module 23 and the sending module 22 in the embodiments shown in FIG. 16 and FIG. 17 may be respectively implemented via a transceiver of the ONU; the latency module 21 and the communication module 24 may be respectively implemented via the processor of the ONU. The processor may be, for example, a CPU, or an ASIC, or one or more integrated circuits for completing the implementation of the embodiments of the present invention.

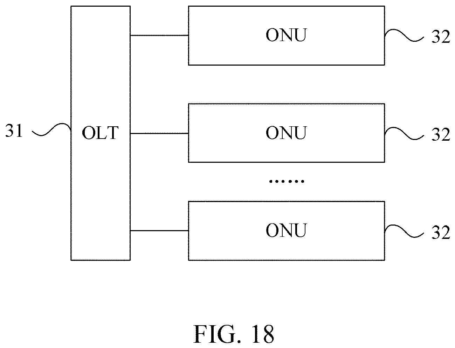

The following embodiment related to FIG. 18 is not according to the invention and are present for illustration purposes only.

FIG. 18 is a structural schematic diagram of a passive optical network system provided by an embodiment of the present invention. The passive optical network registration system provided by the embodiment is applied to registration of ONUs in a WDM PON system. The passive optical network system includes: an OLT31 and at least one ONU32. The OLT31 is connected with each of the ONUs32. Herein, the device of registering on a passive optical network in the embodiments shown in FIG. 13 to FIG. 15 is arranged in the OLT31. The device of registering on a passive optical network shown in the embodiments shown in FIG. 16 and FIG. 17 is arranged in each ONU32. The passive optical network system shown in FIG. 17 is illustrated with an example containing three OUNs32. In the embodiment, various network elements in the passive optical network system are used for registration in the WDM PON system in the manner same as the manner in which corresponding network elements in the embodiments shown in FIG. 13 to FIG. 17 are registered in the WDM PON system. The various network elements in the passive optical network system are also configured to implement the method of registering on a passive optical network provided by any embodiment shown in FIG. 1 to FIG. 12, and are provided with corresponding physical devices. The implementation principle and the technical effect are similar and will not be repeated herein.

The following embodiments in which a computer readable storage medium is provided are not according to the invention and are present for illustration purposes only.

An embodiment of the present invention further provides a computer readable storage medium, which stores a computer executable instruction. The computer executable instruction, when being executed, implements the method of registering on a passive optical network at the OLT side.

An embodiment of the present invention further provides a computer readable storage medium, which stores a computer executable instruction. The computer executable instruction, when being executed, implements the method of registering on a passive optical network at the ONU side.

A person of ordinary skill in the art may understand that all or a part of the steps of the methods may be implemented by relevant hardware (such as a processor) instructed by the program. The program may be stored in a computer readable storage medium, such as a read-only memory (ROM), a magnetic disk or an optical disk. In an exemplary embodiment, all or a part of the steps of the above embodiments may also be implemented by using one or more integrated circuits. Correspondingly, each module/unit in the above embodiments may also be implemented by adopting a hardware form, for example, the corresponding functions are implemented via an integrated circuit, and may also be implemented by adopting a form of a software functional module, for example, the corresponding functions are implemented through executing the program/instruction stored in the storage by the processor. The embodiments of the present invention are not limited to any special form of combinations of hardware and software.

The embodiments disclosed in the present application are as described above. The described contents are merely for the convenience of understanding the present application, and are not intended to limit the present application. Any person skilled in the art to which the present application belongs may make any modification and change in implementation forms and details without departing from the rule and scope disclosed by the present application. But, the scope of protection of the present application is still subjected to the scope defined by the appended claims.

### Industrial Applicability

With the method and device of registering on a passive optical network provided by embodiments of the present application, the registration performed in a form of opening the quiet window and adopting the burst mode to send the uplink data is avoided. Therefore, the problems that the bandwidth utilization rate of the system is reduced and the costs of the optical module and the system are increased due to the fact that the ONUs need to adopt the burst mode to transmit the uplink data during the registration in the known registration manner of the WDM PON system are solved.

## Claims

1. A method of registering on a passive optical network, **characterized in that**, the method comprises:
during a registration of each Optical Network Unit, ONU, of a plurality of ONUs to an Optical Line Terminal, OLT, receiving (S110), by the OLT, registration information continuously sent by each ONU of the plurality of ONUs, via a preset wavelength pair, wherein the registration information sent by each ONU of the plurality of ONUs is continuously sent to the OLT after the ONU performs random latency; and
performing (S120), by the OLT, a registration processing according to the received registration information;
wherein performing (S120), by the OLT, the registration processing according to the received registration information comprises: in a case where the OLT does not correctly analyzes the registration information sent by each ONU of the plurality of ONUs, determining (S122) that an operation of allocating a wavelength pair is not performed and indicating each ONU of the plurality of ONUs to re-send continuously registration information in random latency.

2. The method of registering on a passive optical network according to claim 1, wherein the performing, by the OLT, the registration processing according to the received registration information comprises:
allocating (S121) a first wavelength pair to a first ONU when the OLT correctly analyzes registration information sent by the first ONU.

3. The method of registering on a passive optical network according to claim 2, wherein the first wavelength pair allocated to the first ONU by the OLT is a wavelength pair used when the first ONU sends the registration information, or another wavelength pair designated by the OLT.

4. The method of registering on a passive optical network according to claim 1, wherein before receiving, by the OLT, the registration information continuously sent by each ONU of the plurality of ONUs via the preset wavelength pair, the method of registering on a passive optical network further comprises:
sending (S 101), by the OLT, a registration indication message to each ONU of the plurality of ONUs, wherein the registration indication message comprises at least one of the following information: a random latency threshold value, and the preset wavelength pair used for registration by each ONU in an optical network system; and
wherein the random latency threshold value is used for indicating a range of the random latency performed when each ONU of the plurality of ONUs continuously sends the registration information to the OLT.

5. The method of registering on a passive optical network according to claim 4, wherein before sending, by the OLT, the registration indication message to each ONU of the plurality of ONUs, the method of registering on a passive optical network further comprises:
generating (S 100), by the OLT, the random latency threshold value according to a length of the registration information and a preset quantity of ONUs.

6. The method of registering on a passive optical network according to any one of claims 1-5, wherein the registration information received by the OLT comprises registration information sent by a second ONU and a third ONU; and the preset wavelength pair comprises a first wavelength pair and a second wavelength pair; and
after performing, by the OLT, the registration processing, the method of registering on a passive optical network further comprises:
sending, by the OLT, a registration feedback message to the second ONU and the third ONU;
wherein when the OLT allocates the first wavelength pair to the second ONU, the registration feedback message comprises wavelength allocation information, wherein the wavelength allocation information is used for indicating the second ONU to establish a communication connection with the OLT via the first wavelength pair, and the wavelength allocation information is further used for indicating the third ONU to continuously re-send registration information to the OLT via the second wavelength pair; and
when the OLT determines that the operation of allocating the wavelength pair is not performed, the registration feedback message is used for indicating the second ONU and the third ONU to continuously re-send registration information to the OLT;
wherein after the OLT determines that the operation of allocating the wavelength pair is not performed and before sending the registration feedback message, the method of registering on a passive optical network further comprises:
adjusting (S 123), by the OLT, a preset quantity of ONUs, and regenerating a random latency threshold value according to a length of the registration information and the adjusted quantity of the ONUs; wherein the registration feedback message sent by the OLT further comprises the regenerated random latency threshold value.

7. A method of registering on a passive optical network, **characterized in that**, the method comprises:
during a registration of an Optical Network Unit, ONU, to an Optical Line Terminal, OLT, performing (S210), by the ONU, random latency on registration information to be sent;
selecting (S220), by the ONU, one wavelength pair in a preset wavelength pair to continuously send the registration information to the OLT; and
in a case where the OLT does not correctly analyzes the registration information sent by each ONU of a plurality of ONUs, performing, by the ONU, according to an indication of the OLT, random latency on registration information to be sent and continuously re-sending, by the ONU, the registration information to the OLT.

8. The method of registering on a passive optical network according to claim 7, wherein before performing, by the ONU, the random latency on the registration information to be sent, the method of registering on a passive optical network further comprises:
receiving (S200), by the ONU, a registration indication message sent by the OLT, wherein the registration indication message comprises at least one of the following information: a random latency threshold value, and the preset wavelength pair used for registration by each ONU in an optical network system; and
the performing, by the ONU, random latency on registration information to be sent comprises:
performing (S210), by the ONU, the random latency on the registration information within a range indicated by the random latency threshold value.

9. The method of registering on a passive optical network according to claim 7, wherein after selecting, by the ONU, one wavelength pair in the preset wavelength pair to continuously send the registration information to the OLT, the method of registering on a passive optical network further comprises:
receiving (S230), by the ONU, a registration feedback message sent by the OLT, wherein the registration feedback message comprises wavelength allocation information or re-registration indication information, and the wavelength allocation information comprises a first wavelength pair allocated by the OLT.

10. The method of registering on a passive optical network according to claim 9, wherein the preset wavelength pair comprises the first wavelength pair and a second wavelength pair; and
when the registration feedback message comprises the wavelength allocation information, after receiving, by the ONU, the registration feedback message sent by the OLT, the method of registering on a passive optical network further comprises:
establishing, by the ONU, a communication connection with the OLT via the first wavelength pair, wherein the first wavelength pair is a wavelength pair used when the ONU sends the registration information, or another wavelength pair designated by the OLT; or
continuously re-sending, by the ONU, registration information to the OLT via the second wavelength pair according to the wavelength allocation information.

11. The method of registering on a passive optical network according to claim 9, wherein the preset wavelength pair comprises the first wavelength pair and a second wavelength pair; and
when the registration feedback message comprises the re-registration indication information, after receiving, by the ONU, the registration feedback message sent by the OLT, the method of registering on a passive optical network further comprises:
selecting, by the ONU, the second wavelength pair according to the re-registration indication information to continuously re-send registration information to the OLT.

12. The method of registering on a passive optical network according to any one of claims 9-11, wherein the registration feedback message further comprises a random latency threshold value adjusted by the OLT; and
the method of registering on a passive optical network further comprises: performing (S260), by the ONU, the random latency according to the adjusted random latency threshold value, and then continuously re-sending registration information to the OLT.

13. The method of registering on a passive optical network according to any one of claims 7-11, wherein time of the random latency performed by the ONU is greater than or equal to time of sending each piece of registration information; or the time of the random latency performed by the ONU is an integer multiple of the time of sending each piece of registration information.

14. A device of registering on a passive optical network, arranged in an Optical Line Terminal, OLT, **characterized in that**, the device of registering on a passive optical network comprises:
a receiving module, configured to be capable of during a registration of each Optical Network Unit, ONU, of a plurality of ONUs to the OLT, receiving registration information continuously sent by each ONU of the plurality of ONUs, via a preset wavelength pair, wherein the registration information sent by each ONU of the plurality of ONUs is continuously sent to the OLT after the ONU performs random latency; and
a processing module connected with the receiving module, configured to be capable of performing a registration processing according to the registration information received by the receiving module;
the processing module is configured to be capable of performing the registration processing according to the registration information received by the receiving module in the following manner: in a case where the OLT does not correctly analyzes the registration information sent by each ONU of the plurality of ONUs, determining that an operation of allocating a wavelength pair is not performed and indicating each ONU of the plurality of ONUs to re-send continuously registration information in random latency.

15. A device of registering on a passive optical network, arranged in an Optional Network Unit, ONU, **characterized in that**, the device of registering on a passive optical network comprises:
a latency module, configured to be capable of during a registration of the ONU, to an Optical Line Terminal, OLT, performing random latency on registration information to be sent;
a sending module connected with the latency module, configured to be capable of selecting one wavelength pair in a preset wavelength pair to continuously send the registration information to the OLT;
the latency module is further configured to be capable of in a case where the OLT does not correctly analyzes the registration information sent by each ONU of a plurality of ONUs, performing, by the ONU, according to an indication of the OLT, random latency on registration information to be sent, and the sending module is further configured to be capable of continuously re-sending, by the ONU, the registration information to the OLT.

## Patentansprüche

1. Verfahren zur Registrierung in einem passiven optischen Netzwerk, **dadurch gekennzeichnet, dass** das Verfahren umfasst:
während einer Registrierung jeder optischen Netzwerkeinheit (ONU) einer Vielzahl von ONUs bei einem optischen Leitungsterminal (OLT), Empfangen (S110) von Registrierungsinformationen durch das OLT, die kontinuierlich von jeder ONU der Vielzahl von ONUs über ein voreingestelltes Wellenlängenpaar gesendet werden, wobei die von jeder ONU der Vielzahl von ONUs gesendeten Registrierungsinformationen kontinuierlich an das OLT gesendet werden, nachdem die ONU eine zufällige Latenzzeit aufweist; und
Durchführen (S120) einer Registrierungsverarbeitung durch das OLT gemäß den empfangenen Registrierungsinformationen;
wobei das Durchführen (S120) der Registrierungsverarbeitung durch das OLT gemäß der empfangenen Registrierungsinformationen Folgendes umfasst: in einem Fall, in dem das OLT die von jeder ONU der Vielzahl von ONUs gesendeten Registrierungsinformationen nicht richtig analysiert, Bestimmen (S122), dass ein Vorgang zum Zuweisen eines Wellenlängenpaars nicht durchgeführt wird, und Anweisen jeder ONU der Vielzahl von ONUs, Registrierungsinformationen kontinuierlich mit zufälliger Latenz erneut zu senden.

2. Verfahren zur Registrierung in einem passiven optischen Netzwerk nach Anspruch 1, wobei das Durchführen der Registrierungsverarbeitung durch das OLT gemäß den empfangenen Registrierungsinformationen umfasst:
Zuweisen (S121) eines ersten Wellenlängenpaars zu einer ersten ONU, wenn das OLT die von der ersten ONU gesendeten Registrierungsinformationen korrekt analysiert.

3. Verfahren zur Registrierung in einem passiven optischen Netzwerk nach Anspruch 2, wobei das erste Wellenlängenpaar, das der ersten ONU vom OLT zugewiesen wird, ein Wellenlängenpaar ist, das verwendet wird, wenn die erste ONU die Registrierungsinformationen sendet, oder ein anderes vom OLT bestimmtes Wellenlängenpaar.

4. Verfahren zur Registrierung in einem passiven optischen Netzwerk nach Anspruch 1, wobei das Verfahren zur Registrierung in einem passiven optischen Netzwerk vor dem Empfangen der von jeder ONU der Vielzahl von ONUs kontinuierlich über das voreingestellte Wellenlängenpaar gesendeten Registrierungsinformationen durch das OLT weiterhin umfasst:
Senden (S101) einer Registrierungsanzeigenachricht durch das OLT an jede ONU der Vielzahl von ONUs, wobei die Registrierungsanzeigenachricht mindestens eine der folgenden Informationen umfasst: einen zufälligen Latenzschwellenwert und das voreingestellte Wellenlängenpaar, das von jeder ONU in einem optischen Netzwerksystem zur Registrierung verwendet wird; und wobei der Zufallslatenzschwellenwert zum Anzeigen eines Bereichs der Zufallslatenz verwendet wird, der auftritt, wenn jede ONU der Vielzahl von ONUs kontinuierlich die Registrierungsinformationen an das OLT sendet.

5. Verfahren zum Registrieren in einem passiven optischen Netzwerk nach Anspruch 4, wobei das Verfahren zum Registrieren in einem passiven optischen Netzwerk vor dem Senden der Registrierungsanzeigenachricht durch das OLT an jede ONU der Vielzahl von ONUs weiterhin umfasst:
Generieren (S100) des zufälligen Latenzschwellenwerts durch das OLT entsprechend einer Länge der Registrierungsinformationen und einer voreingestellten Anzahl von ONUs.

6. Verfahren zur Registrierung in einem passiven optischen Netzwerk nach einem der Ansprüche 1 bis 5, wobei die vom OLT empfangenen Registrierungsinformationen umfassen, die von einer zweiten ONU und einer dritten ONU gesendet wurden; und das voreingestellte Wellenlängenpaar ein erstes Wellenlängenpaar und ein zweites Wellenlängenpaar umfasst; und
Nachdem die Registrierungsverarbeitung durch das OLT durchgeführt wurde, umfasst das Verfahren zur Registrierung in einem passiven optischen Netzwerk weiterhin:
Senden einer Registrierungsrückmeldung durch das OLT an die zweite ONU und die dritte ONU;
wobei, wenn das OLT das erste Wellenlängenpaar der zweiten ONU zuweist, die Registrierungsrückmeldung Informationen zur Wellenlängenzuweisung umfasst, wobei die Informationen zur Wellenlängenzuweisung verwendet werden, um der zweiten ONU anzuweisen, über das erste Wellenlängenpaar eine Kommunikationsverbindung mit dem OLT herzustellen, und die Informationen zur Wellenlängenzuweisung ferner verwendet werden, um der dritten ONU anzuweisen, über das zweite Wellenlängenpaar kontinuierlich erneut Registrierungsinformationen an das OLT zu senden; und
wenn das OLT feststellt, dass der Vorgang der Zuweisung des Wellenlängenpaars nicht durchgeführt wurde, wird die Registrierungsrückmeldung verwendet, um der zweiten ONU und der dritten ONU mitzuteilen, dass sie Registrierungsinformationen kontinuierlich erneut an das OLT senden sollen;
wobei, nachdem das OLT bestimmt hat, dass der Vorgang des Zuweisens des Wellenlängenpaars nicht durchgeführt wurde, und bevor die Registrierungs-Feedbacknachricht gesendet wird, das Verfahren zum Registrieren in einem passiven optischen Netzwerk weiterhin umfasst:
Anpassen (S123) einer voreingestellten Menge an ONUs durch das OLT und Neugenerieren eines zufälligen Latenzschwellenwerts entsprechend einer Länge der Registrierungsinformationen und der angepassten Menge der ONUs; wobei die vom OLT gesendete Registrierungs-Feedbacknachricht außerdem den neu generierten zufälligen Latenzschwellenwert umfasst.

7. Verfahren zur Registrierung in einem passiven optischen Netzwerk, **dadurch gekennzeichnet, dass** das Verfahren umfasst:
Durchführen (S210) einer zufälligen Latenz bei zu sendenden Registrierungsinformationen durch die ONU während einer Registrierung einer optischen Netzwerkeinheit (ONU) bei einem optischen Leitungsterminal (OLT);
Auswählen (S220) eines Wellenlängenpaars in einem voreingestellten Wellenlängenpaar durch die ONU, um die Registrierungsinformationen kontinuierlich an das OLT zu senden; und
in einem Fall, in dem das OLT die von jeder ONU einer Vielzahl von ONUs gesendeten Registrierungsinformationen nicht richtig analysiert, Durchführen einer zufälligen Latenz durch die ONU hinsichtlich der zu sendenden Registrierungsinformationen gemäß einer Angabe des OLT und kontinuierliches erneutes Senden der Registrierungsinformationen durch die ONU an das OLT.

8. Verfahren zur Registrierung in einem passiven optischen Netzwerk nach Anspruch 7, wobei das Verfahren zur Registrierung in einem passiven optischen Netzwerk vor der Durchführung der zufälligen Latenzzeit für die zu sendenden Registrierungsinformationen durch die ONU weiterhin umfasst:
Senden (S200) einer Registrierungsanzeigenachricht durch das OLT an die ONU, wobei die Registrierungsanzeigenachricht mindestens eine der folgenden Informationen umfasst: einen zufälligen Latenzschwellenwert und das voreingestellte Wellenlängenpaar, das von jeder ONU in einem optischen Netzwerksystem zur Registrierung verwendet wird; und
Die von der ONU durchgeführte zufällige Latenzzeit für zu sendende Registrierungsinformationen umfasst:
Durchführen (S210) der zufälligen Latenz der Registrierungsinformationen durch die ONU innerhalb eines durch den Zufallslatenzschwellenwert angegebenen Bereichs.

9. Verfahren zum Registrieren in einem passiven optischen Netzwerk nach Anspruch 7, wobei nach dem Auswählen eines Wellenlängenpaars in dem voreingestellten Wellenlängenpaar durch die ONU zum kontinuierlichen Senden der Registrierungsinformationen an das OLT das Verfahren zum Registrieren in einem passiven optischen Netzwerk weiterhin umfasst:
Empfangen (S230) einer vom OLT gesendeten Registrierungs-Feedbacknachricht durch die ONU, wobei die Registrierungs-Feedbacknachricht Informationen zur Wellenlängenzuweisung oder Informationen zur Anzeige einer erneuten Registrierung umfasst und die Informationen zur Wellenlängenzuweisung ein erstes vom OLT zugewiesenes Wellenlängenpaar umfassen.

10. Das Verfahren zur Registrierung in einem passiven optischen Netzwerk gemäß Anspruch 9, wobei das voreingestellte Wellenlängenpaar das erste Wellenlängenpaar und ein zweites Wellenlängenpaar umfasst; und
Wenn die Registrierungs-Feedbacknachricht die Informationen zur Wellenlängenzuordnung umfasst, umfasst das Verfahren zur Registrierung in einem passiven optischen Netzwerk nach dem Empfang der vom OLT gesendeten Registrierungs-Feedbacknachricht durch die ONU weiterhin:
Herstellen einer Kommunikationsverbindung durch die ONU mit dem OLT über das erste Wellenlängenpaar, wobei das erste Wellenlängenpaar ein Wellenlängenpaar ist, das verwendet wird, wenn die ONU die Registrierungsinformationen sendet, oder ein anderes, vom OLT bestimmtes Wellenlängenpaar; oder
kontinuierliches erneutes Senden von Registrierungsinformationen durch die ONU an das OLT über das zweite Wellenlängenpaar gemäß den Informationen zur Wellenlängenzuweisung.

11. Das Verfahren zur Registrierung in einem passiven optischen Netzwerk gemäß Anspruch 9, wobei das voreingestellte Wellenlängenpaar das erste Wellenlängenpaar und ein zweites Wellenlängenpaar umfasst; und
Wenn die Registrierungs-Feedbacknachricht die Informationen zur Anzeige der erneuten Registrierung umfasst, umfasst das Verfahren zur Registrierung in einem passiven optischen Netzwerk nach dem Empfang der vom OLT gesendeten Registrierungs-Feedbacknachricht durch die ONU weiterhin:
Auswählen des zweiten Wellenlängenpaars durch die ONU gemäß den Neuregistrierungsanzeigeinformationen, um Registrierungsinformationen kontinuierlich erneut an das OLT zu senden.

12. Das Verfahren zur Registrierung in einem passiven optischen Netzwerk gemäß einem der Ansprüche 9 bis 11, wobei die Registrierungsrückmeldung außerdem einen zufälligen Latenzschwellenwert umfasst, der vom OLT angepasst wird; und Das Verfahren zum Registrieren in einem passiven optischen Netzwerk umfasst außerdem: Durchführen (S260) der zufälligen Latenz durch die ONU gemäß dem angepassten Schwellenwert der zufälligen Latenz und anschließendes kontinuierliches erneutes Senden von Registrierungsinformationen an das OLT.

13. Verfahren zur Registrierung in einem passiven optischen Netzwerk gemäß einem der Ansprüche 7 bis 11, wobei die Zeit der von der ONU ausgeführten zufälligen Latenz größer oder gleich der Zeit des Sendens jeder Registrierungsinformation ist; oder die Zeit der von der ONU ausgeführten zufälligen Latenz ein ganzzahliges Vielfaches der Zeit des Sendens jeder Registrierungsinformation ist.

14. Eine Vorrichtung zur Registrierung in einem passiven optischen Netzwerk, die in einem Optical Line Terminal (OLT) angeordnet ist, **dadurch gekennzeichnet, dass** die Vorrichtung zur Registrierung in einem passiven optischen Netzwerk umfasst:
ein Empfangsmodul, konfiguriert, um in der Lage zu sein, während einer Registrierung jeder optischen Netzwerkeinheit (ONU) einer Vielzahl von ONUs bei einem OLT, Empfangen von Registrierungsinformationen, die kontinuierlich von jeder ONU der Vielzahl von ONUs über ein voreingestelltes Wellenlängenpaar gesendet werden, wobei die von jeder ONU der Vielzahl von ONUs gesendeten Registrierungsinformationen kontinuierlich an das OLT gesendet werden, nachdem die ONU eine zufällige Latenzzeit aufweist; und
ein mit dem Empfangsmodul verbundenes Verarbeitungsmodul, das so konfiguriert ist, dass es eine Registrierungsverarbeitung gemäß den vom Empfangsmodul empfangenen Registrierungsinformationen durchführen kann;
das Verarbeitungsmodul ist konfiguriert, um in der Lage zu sein, die Registrierungsverarbeitung gemäß der vom Empfangsmodul empfangenen Registrierungsinformationen auf folgende Weise durchzuführen: in einem Fall, in dem das OLT die von jeder ONU der Vielzahl von ONUs gesendeten Registrierungsinformationen nicht richtig analysiert, Bestimmen, dass ein Vorgang zum Zuweisen eines Wellenlängenpaars nicht durchgeführt wird, und Anweisen jeder ONU der Vielzahl von ONUs, Registrierungsinformationen kontinuierlich mit zufälliger Latenz erneut zu senden.

15. Eine Vorrichtung zur Registrierung in einem passiven optischen Netzwerk, die in einer Optional Network Unit (ONU) angeordnet ist, **dadurch gekennzeichnet, dass** die Vorrichtung zur Registrierung in einem passiven optischen Netzwerk umfasst:
ein Latenzmodul, das so konfiguriert ist, dass es während einer Registrierung der ONU bei einem Optical Line Terminal (OLT) eine zufällige Latenz bei den zu sendenden Registrierungsinformationen ausführen kann;
ein Sendemodul, das mit dem Latenzmodul verbunden ist und so konfiguriert ist, dass es ein Wellenlängenpaar aus einem voreingestellten Wellenlängenpaar auswählen kann, um die Registrierungsinformationen kontinuierlich an das OLT zu senden;
das Latenzmodul ist ferner so konfiguriert, dass es in einem Fall, in dem das OLT die von jeder ONU einer Vielzahl von ONUs gesendeten Registrierungsinformationen nicht richtig analysiert, durch die ONU gemäß einer Angabe des OLT eine zufällige Latenz der zu sendenden Registrierungsinformationen durchführen kann, und das Sendemodul ist ferner so konfiguriert, dass es durch die ONU die Registrierungsinformationen kontinuierlich erneut an das OLT senden kann.

## Revendications

1. Procédé d'inscription sur un réseau optique passif, **caractérisé en ce que** le procédé comprend :
lors d'une inscription de chaque unité de réseau optique, ONU, d'une pluralité d'ONU à un terminal de ligne optique, OLT, la réception (S110), par l'OLT, d'informations d'inscription envoyées en continu par chaque ONU de la pluralité d'ONU, via une paire de longueurs d'onde prédéfinie, dans lequel les informations d'inscription envoyées par chaque ONU de la pluralité d'ONU sont envoyées en continu à l'OLT une fois que l'ONU a effectué une latence aléatoire ; et
la réalisation (S120), par l'OLT, d'un traitement d'inscription en fonction des informations d'inscription reçues ;
dans lequel la réalisation (S120), par l'OLT, du traitement d'inscription en fonction des informations d'inscription reçues comprend : dans le cas où l'OLT n'analyse pas correctement les informations d'inscription envoyées par chaque ONU de la pluralité d'ONU, le fait de déterminer (S122) qu'une opération d'attribution d'une paire de longueurs d'onde n'est pas effectuée et l'indication à chaque ONU de la pluralité d'ONU de renvoyer en continu des informations d'inscription avec une latence aléatoire.

2. Procédé d'inscription sur un réseau optique passif selon la revendication 1, dans lequel la réalisation, par l'OLT, du traitement d'inscription en fonction des informations d'inscription reçues comprend :
l'attribution (S121) d'une première paire de longueurs d'onde à une première ONU lorsque l'OLT analyse correctement des informations d'inscription envoyées par la première ONU.

3. Procédé d'inscription sur un réseau optique passif selon la revendication 2, dans lequel la première paire de longueurs d'onde attribuée à la première ONU par l'OLT est une paire de longueurs d'onde utilisée lorsque la première ONU envoie les informations d'inscription, ou une autre paire de longueurs d'onde désignée par l'OLT.

4. Procédé d'inscription sur un réseau optique passif selon la revendication 1, dans lequel avant la réception, par l'OLT, des informations d'inscription envoyées en continu par chaque ONU de la pluralité d'ONU via la paire de longueurs d'onde prédéfinie, le procédé d'inscription sur un réseau optique passif comprend en outre :
l'envoi (S101), par l'OLT, d'un message d'indication d'inscription à chaque ONU de la pluralité d'ONU, dans lequel le message d'indication d'inscription comprend au moins l'une des informations suivantes : une valeur seuil de latence aléatoire et la paire de longueurs d'onde prédéfinie utilisée pour l'inscription par chaque ONU dans un système de réseau optique ; et
dans lequel la valeur seuil de latence aléatoire est utilisée pour indiquer une plage de latence aléatoire effectuée lorsque chaque ONU de la pluralité d'ONU envoie en continu les informations d'inscription à l'OLT.

5. Procédé d'inscription sur un réseau optique passif selon la revendication 4, dans lequel avant l'envoi, par l'OLT, du message d'indication d'inscription à chaque ONU de la pluralité d'ONU, le procédé d'inscription sur un réseau optique passif comprend en outre :
la génération (S100), par l'OLT, de la valeur seuil de latence aléatoire en fonction d'une longueur des informations d'inscription et d'une quantité prédéfinie d'ONU.

6. Procédé d'inscription sur un réseau optique passif selon l'une quelconque des revendications 1 à 5, dans lequel les informations d'inscription reçues par l'OLT comprennent des informations d'inscription envoyées par une deuxième ONU et une troisième ONU ; et la paire de longueurs d'onde prédéfinie comprend une première paire de longueurs d'onde et une seconde paire de longueurs d'onde ; et
après la réalisation, par l'OLT, du traitement d'inscription, le procédé d'inscription sur un réseau optique passif comprend en outre :
l'envoi, par l'OLT, d'un message de retour d'inscription à la deuxième ONU et à la troisième ONU ;
dans lequel lorsque l'OLT attribue la première paire de longueurs d'onde à la deuxième ONU, le message de retour d'inscription comprend des informations d'attribution de longueur d'onde, dans lequel les informations d'attribution de longueur d'onde sont utilisées pour indiquer à la deuxième ONU d'établir une connexion de communication avec l'OLT via la première paire de longueurs d'onde, et les informations d'attribution de longueur d'onde sont en outre utilisées pour indiquer à la troisième ONU de renvoyer en continu des informations d'inscription à l'OLT via la seconde paire de longueurs d'onde ; et
lorsque l'OLT détermine que l'opération d'attribution de la paire de longueurs d'onde n'est pas effectuée, le message de retour d'inscription est utilisé pour indiquer à la deuxième ONU et à la troisième ONU de renvoyer en continu des informations d'inscription à l'OLT ;
dans lequel, une fois que l'OLT détermine que l'opération d'attribution de la paire de longueurs d'onde n'est pas effectuée et avant l'envoi du message de retour d'inscription, le procédé d'inscription sur un réseau optique passif comprend en outre :
l'ajustement (S123), par l'OLT, d'une quantité prédéfinie d'ONU, et la régénération d'une valeur seuil de latence aléatoire en fonction d'une longueur des informations d'inscription et de la quantité ajustée d'ONU ; dans lequel le message de retour d'inscription envoyé par l'OLT comprend en outre la valeur seuil de latence aléatoire régénérée.

7. Procédé d'inscription sur un réseau optique passif, **caractérisé en ce que** le procédé comprend :
lors d'une inscription d'une unité de réseau optique, ONU, à un terminal de ligne optique, OLT, la réalisation (S210), par l'ONU, d'une latence aléatoire sur des informations d'inscription à envoyer ;
la sélection (S220), par l'ONU, d'une paire de longueurs d'onde dans une paire de longueurs d'onde prédéfinie pour envoyer en continu les informations d'inscription à l'OLT ; et
dans le cas où l'OLT n'analyse pas correctement les informations d'inscription envoyées par chaque ONU d'une pluralité d'ONU, la réalisation, par l'ONU, selon une indication de l'OLT, d'une latence aléatoire sur des informations d'inscription à envoyer et le renvoi en continu, par l'ONU, des informations d'inscription à l'OLT.

8. Procédé d'inscription sur un réseau optique passif selon la revendication 7, dans lequel avant la réalisation, par l'ONU, de la latence aléatoire sur les informations d'inscription à envoyer, le procédé d'inscription sur un réseau optique passif comprend en outre :
la réception (S200), par l'ONU, d'un message d'indication d'inscription envoyé par l'OLT, dans lequel le message d'indication d'inscription comprend au moins l'une des informations suivantes : une valeur seuil de latence aléatoire et la paire de longueurs d'onde prédéfinie utilisée pour l'inscription par chaque ONU dans un système de réseau optique ; et
la réalisation, par l'ONU, d'une latence aléatoire sur des informations d'inscription à envoyer comprend :
la réalisation (S210), par l'ONU, de la latence aléatoire sur les informations d'inscription dans une plage indiquée par la valeur seuil de latence aléatoire.

9. Procédé d'inscription sur un réseau optique passif selon la revendication 7, dans lequel après la sélection, par l'ONU, d'une paire de longueurs d'onde dans la paire de longueurs d'onde prédéfinie pour envoyer en continu les informations d'inscription à l'OLT, le procédé d'inscription sur un réseau optique passif comprend en outre :
la réception (S230), par l'ONU, d'un message de retour d'inscription envoyé par l'OLT, dans lequel le message de retour d'inscription comprend des informations d'attribution de longueur d'onde ou des informations d'indication de réinscription, et les informations d'attribution de longueur d'onde comprennent une première paire de longueurs d'onde attribuée par l'OLT.

10. Procédé d'inscription sur un réseau optique passif selon la revendication 9, dans lequel la paire de longueurs d'onde prédéfinie comprend la première paire de longueurs d'onde et une seconde paire de longueurs d'onde ; et
lorsque le message de retour d'inscription comprend les informations d'attribution de longueur d'onde, après réception, par l'ONU, du message de retour d'inscription envoyé par l'OLT, le procédé d'inscription sur un réseau optique passif comprend en outre :
l'établissement, par l'ONU, d'une connexion de communication avec l'OLT via la première paire de longueurs d'onde, dans lequel la première paire de longueurs d'onde est une paire de longueurs d'onde utilisée lorsque l'ONU envoie les informations d'inscription, ou une autre paire de longueurs d'onde désignée par l'OLT ; ou
le renvoi en continu, par l'ONU, d'informations d'inscription à l'OLT via la seconde paire de longueurs d'onde en fonction des informations d'attribution de longueur d'onde.

11. Procédé d'inscription sur un réseau optique passif selon la revendication 9, dans lequel la paire de longueurs d'onde prédéfinie comprend la première paire de longueurs d'onde et une seconde paire de longueurs d'onde ; et
lorsque le message de retour d'inscription comprend les informations d'indication de réinscription, après réception, par l'ONU, du message de retour d'inscription envoyé par l'OLT, le procédé d'inscription sur un réseau optique passif comprend en outre :
la sélection, par l'ONU, de la seconde paire de longueurs d'onde en fonction des informations d'indication de réinscription pour renvoyer en continu des informations d'inscription à l'OLT.

12. Procédé d'inscription sur un réseau optique passif selon l'une quelconque des revendications 9 à 11, dans lequel le message de retour d'inscription comprend en outre une valeur seuil de latence aléatoire ajustée par l'OLT ; et
le procédé d'inscription sur un réseau optique passif comprend en outre : la réalisation (S260), par l'ONU, de la latence aléatoire en fonction de la valeur seuil de latence aléatoire ajustée, puis le renvoi en continu d'informations d'inscription à l'OLT.

13. Procédé d'inscription sur un réseau optique passif selon l'une quelconque des revendications 7 à 11, dans lequel le temps de latence aléatoire effectué par l'ONU est supérieur ou égal au temps d'envoi de chaque élément d'information d'inscription ; ou le temps de latence aléatoire effectué par l'ONU est un multiple entier du temps d'envoi de chaque élément d'information d'inscription.

14. Dispositif d'inscription sur un réseau optique passif, disposé dans un terminal de ligne optique, OLT, **caractérisé en ce que** le dispositif d'inscription sur un réseau optique passif comprend :
un module de réception, configuré pour être capable, lors d'une inscription de chaque unité de réseau optique, ONU, d'une pluralité d'ONU à l'OLT, de recevoir des informations d'inscription envoyées en continu par chaque ONU de la pluralité d'ONU, via une paire de longueurs d'onde prédéfinie, dans lequel les informations d'inscription envoyées par chaque ONU de la pluralité d'ONU sont envoyées en continu à l'OLT une fois que l'ONU a effectué une latence aléatoire ; et
un module de traitement connecté au module de réception, configuré pour être capable d'effectuer un traitement d'inscription en fonction des informations d'inscription reçues par le module de réception ;
le module de traitement est configuré pour être capable d'effectuer le traitement d'inscription en fonction des informations d'inscription reçues par le module de réception de la manière suivante : dans le cas où l'OLT n'analyse pas correctement les informations d'inscription envoyées par chaque ONU de la pluralité d'ONU, le fait de déterminer qu'une opération d'attribution d'une paire de longueurs d'onde n'est pas effectuée et l'indication à chaque ONU de la pluralité d'ONU de renvoyer en continu des informations d'inscription avec une latence aléatoire.

15. Dispositif d'inscription sur un réseau optique passif, disposé dans une unité de réseau optique, ONU, **caractérisé en ce que** le dispositif d'inscription sur un réseau optique passif comprend :
un module de latence, configuré pour être capable, lors d'une inscription de l'ONU, sur un terminal de ligne optique, OLT, d'effectuer une latence aléatoire sur des informations d'inscription à envoyer ;
un module d'envoi connecté au module de latence, configuré pour être capable de sélectionner une paire de longueurs d'onde dans une paire de longueurs d'onde prédéfinie pour envoyer en continu les informations d'inscription à l'OLT ;
le module de latence est en outre configuré pour être capable, dans le cas où l'OLT n'analyse pas correctement les informations d'inscription envoyées par chaque ONU d'une pluralité d'ONU, d'effectuer, par l'ONU, selon une indication de l'OLT, une latence aléatoire sur des informations d'inscription à envoyer, et le module d'envoi est en outre configuré pour être capable de renvoyer en continu, par l'ONU, les informations d'inscription à l'OLT.
